# FASCICULE DE BREVET EUROPEEN

(11) **EP 3 105 051 B1**
(45) Date de publication et mention de la délivrance du brevet: **11.04.2018**
(21) Numéro de dépôt: 15706894.1
(22) Date de dépôt: 09.02.2015
(51) Int. Cl.: B32B 17/10, F21V 8/00, G02B 6/02

(54) **VITRAGE LUMINEUX AVEC ISOLATEUR OPTIQUE**
LEUCHTVERGLASUNG MIT OPTISCHEM ISOLATOR
LUMINOUS GLAZING WITH OPTICAL ISOLATOR

(30) Priorité: 10.02.2014 FR 1450997
(43) Date de publication de la demande: 21.12.2016
(73) Titulaire: Saint-Gobain Glass France, 92400 Courbevoie (FR)
(72) Inventeur: BERARD, Matthieu, F-75019 Paris (FR); GUISET, Pierrick, F-91300 Massy (FR); SARRANT-FORESTI, Maud, F-75010 Paris (FR); LEYDER, Charles, F-75019 Paris (FR)
(74) Mandataire: Saint-Gobain Recherche
(86) Numéro de dépôt international: PCT/FR2015/050301
(87) Numéro de publication internationale: WO 2015/118279

(56) Documents cités:
- EP-A1- 2 423 173
- WO-A1-2012/098330
- FR-A1- 2 694 069

## Description

La présente invention se rapporte au domaine de l'éclairage et plus particulièrement concerne un vitrage lumineux à diodes agencés sur la tranche du vitrage.

Il est connu de former un vitrage lumineux en éclairant un verre par la tranche avec une source de lumière comme un ensemble de LED. La lumière ainsi injectée est guidée par réflexion totale interne à l'intérieur de ce verre grâce au contraste d'indice de réfraction avec les matériaux environnants. Cette lumière est ensuite extraite à l'aide de moyens diffusants.

Le document WO2008/059171 propose, en relation avec la figure 5, un panneau lumineux à éclairage par la tranche comportant un guide plan, par exemple un verre clair d'épaisseur 2mm, dont la tranche est couplée à une source de lumière, un réseau de LED, éventuellement dans une rainure de la tranche, et comportant sur une première face principale 11 :
- une couche poreuse discontinue, d'épaisseur de l'ordre de 300nm et d'indice n2 égal à 1,1, qui est une couche sol gel de silice poreuse,
- une couche diffusante sur la couche de silice poreuse et couvrant entièrement la première face.

Lorsque la source de lumière n'est pas allumée, le panneau présente un aspect blanc homogène et diffusant et sert par exemple comme cloison, pour préserver l'intimité (effet privacy). Lorsque la source de lumière est allumée, on perçoit par contraste les zones sans couche de silice poreuse, par exemples des bandes décoratives et/ou formant un élément de signalétique, un logo, une marque...

Dans une variante, par exemple pour un carrelage mural, la couche de silice poreuse bas indice est continue, la couche diffusante est opaque, par exemple une laque, le guide plan est un carreau en verre épais de 6mm et on ajoute un réseau diffusant sur la face externe du carreau.

Cette couche poreuse, grâce à sa faible densité à un indice optique nettement inférieur à celui du verre permet d'isoler optiquement le verre de la laque.

Le document WO2008/059170 propose quant à lui d'utiliser une couche poreuse bas indice comme isolateur optique dans un vitrage feuilleté éclairant à diodes. Cette couche isole optiquement le premier substrat verrier du deuxième substrat verrier teinté. La figure 11 propose ainsi un toit lumineux automobile avec comme couche poreuse une couche sol gel de silice poreuse.

Le document WO2007077099 propose enfin dans sa figure 3 un toit lumineux incorporant la séquence suivante verre de guidage/ colle optique transparente /PVB/couche fonctionnelle/PVB/ verre. Cette colle optique à base d'acrylique d'indice de réfraction de l'ordre de 1,4740 est sur le verre de guidage extraclair d'indice de réfraction 1,52. Cette colle optique est certes de plus bas indice que le verre mais l'écart d'indice de réfraction est -0,046 ce qui reste encore trop faible. D'ailleurs, un coupleur optique au niveau de la tranche du verre de guidage est nécessaire pour l'angle d'incidence soit supérieur à l'angle critique.

L'invention propose un vitrage lumineux davantage robuste que celui de l'art antérieur sans pénaliser ses performances d'efficacité extraction lumineuse ni compliquer sa conception. On souhaite en particulier mieux encore contrôler l'extraction de lumière en un ou des points bien définis et par exemple bien répartis sur la surface du verre.

A cet effet l'invention propose un vitrage lumineux comportant :
- un premier substrat verrier (transparent, clair, extraclair), en verre minéral d'indice de réfraction n1 inférieur à 1,6 à 550nm (mieux dans l'ensemble du spectre visible), et même inférieur à 1,55, de préférence de 1,5 à 1,53, avec des première et deuxième faces principales et une tranche, et en contact optique avec la première face principale :
   - un élément additionnel (décoratif et/ou fonctionnel) qui est teinté (et/)ou diffusant (et/)ou réfléchissant (miroir, miroir espion);
   - un isolateur optique intercalé entre le premier substrat verrier et l'élément additionnel, isolateur optique d'indice de réfraction inférieur à n1 à 550nm,
- une source de lumière (visible), de préférence un ensemble de diodes électroluminescentes (alignées), sur un support comme une carte à circuit imprimé dit support PCB, ou une fibre optique extractrice, couplée optiquement au premier substrat verrier, de préférence par la tranche dite de couplage ou en variante couplée optiquement à l'une des faces principales (notamment avec un logement des diodes), le premier substrat verrier, dit verre de guidage, guidant la lumière émise par la source,
- de préférence des moyens d'extraction de lumière (issue du guidage) associés au verre de guidage (éventuellement vendus séparément ou dans un vitrage lumineux en kit et/ou ajoutés par l'utilisateur), notamment des moyens diffusants du côté de la première face principale (sur ou mieux sous un premier intercalaire de feuilletage) et/ou du côté de (même de préférence sur) la deuxième face principale et/ou dans la masse du verre de guidage, éventuellement formant concentrateur de la lumière.

Et l'isolateur optique selon l'invention comprend (mieux est constitué de) un film à base de fluoropolymère, mieux en fluoropolymère :
- d'indice de réfraction n2 tel que n1-n2 est d'au moins 0,08 à 550nm (mieux dans l'ensemble du spectre visible),
- d'épaisseur e2 d'au moins 600nm, mieux micronique et même d'au moins 10µm,
- en contact optique avec la première face principale, par l'intermédiaire d'un premier intercalaire de feuilletage à base de matière thermoplastique (transparent, clair, extraclair), notamment d'épaisseur d'au plus 1,3mm ou même submillimétrique, d'indice de réfraction n3 à 550nm tel que n3-n1 (en valeur absolue) est inférieur à 0,05 (mieux dans l'ensemble du spectre visible) et même inférieur à 0,03, n3 étant éventuellement inférieur à n1.

Ce film fluoropolymère bas indice permet une mise en oeuvre simple, une souplesse de design (par simple découpage du film) et pour toute taille (grande surface comprise), et surtout une durabilité meilleure qu'une couche poreuse bas indice qui a tendance à perdre sa porosité au fil du temps.

L'intercalaire de feuilletage de par sa transparence et son adhésion uniforme sur le verre de guidage procure une tenue mécanique du film indispensable pour un contact optique satisfaisant.

On préfère distinguer dans le produit final, le film de fluoropolymère bas indice (assemblé via le premier intercalaire) d'une couche ou dépôt de fluoropolymère, déposée par voie liquide. Une couche de fluoropolymère nécessite d'utiliser des solvants spéciaux et l'adhésion peut être très problématique.

Pour le feuilletage on peut utiliser un cycle thermique classique et même mieux celui utilisé pour le vitrage feuilleté renfermant de films plastiques (poly(téréphtalate d'éthylène) dit PET etc).

En outre, n1-n2 peut être au moins supérieur à 0,1 même à 0,15, encore plus préférentiellement supérieur ou égal à 0,2. De préférence, n2 peut être inférieur ou égal à 1,45 voire inférieur ou égal à 1,4.

Le film bas indice permet de guider une lumière un peu plus divergente qu'en son absence. L'indice de réfraction n2 peut être aisément de -1,4 voire -1,34.

A titre illustratif, avec un n1-n2 égal à 0,1 on obtient une acceptance angulaire de +/-35° par rapport à la face d'entrée du film (dans l'air) ce qui, avec une diode lambertienne, correspond à -50% de lumière guidée en plus par rapport à une acceptance de +/- 22° pour n1-n2 égal à 0,046.

L'isolateur optique de préférence est constitué du film bas indice.

En l'absence d'isolateur optique, les pertes optiques sont particulièrement significatives lorsqu'un élément additionnel teinté présente une T_{L} inférieure à 85% notamment pour une épaisseur (de référence) de 4mm ou même 2mm. TL se mesure de façon classique selon la norme EN410 avec illuminant D65 et un spectrophotomètre.

Même un élément réfléchissant, notamment spéculaire, notamment un miroir, à l'argent ou un miroir espion, peut être avantageusement être isolé optiquement pour un meilleur guidage. Des exemples de couches formant miroir espion sont décrits dans le brevet WO2012/035258.

De préférence, l'ensemble verre de guidage et premier intercalaire de feuilletage présente une TL supérieure à 85% et même d'au moins 90% notamment pour une épaisseur de verre de 4mm ou même 2mm.

Par simplicité, le film bas indice s'étend sur l'ensemble du premier intercalaire de feuilletage lui-même s'étendant sensiblement sur l'ensemble du verre de guidage en étant éventuellement en retrait de la tranche de couplage du verre de guidage.

Le film en fluoropolymère peut être à base voire en l'une des matières suivantes :
- le perfluoroalkoxy PFA, notamment de n2 d'environ 1,3
- le poly(vinylidène fluoride) PVDF, notamment de n2 d'environ 1,4
- l'éthylène Chlorotrifluoroéthylène l'ECTFE
- l'éthylène tétrafluoroéthylène l'ETFE , plus précisément poly(éthylène-co- tétrafluoroéthyléne, notamment de n2 d'environ 1,4
- le copolymère Ethylène Propylène perfluoré FEP ou (Fluorinated Ethylene Propylene en anglais) notamment de n2 d'environ 1,3
- le polytétrafluoroéthylène PTFE notamment de n2 d'environ 1,3, mais qui est le plus difficile à laminer.

L'ETFE est préféré car il est le plus facile à laminer sur le premier intercalaire de feuilletage thermoplastique. Le FEP peut être préféré pour son plus faible indice de réfraction ou un flou plus faible avec un laminage acceptable.

Le flou du film (ETFE, FEP) est par exemple d'au plus 2°. On peut citer le produit dénommé Norton ETFE de la société Saint Gobain Performance Plastics de flou entre 1,5 et 2% d'indice de réfraction égal à 1,4 ou Norton FEP de la société Saint Gobain Performance Plastics de flou entre 1,5 et 2% d'indice de réfraction égal à 1,34.

Le flou est mesuré au Hazemeter de préférence selon la norme ASTM D 1003.

Il existe des polysiloxanes comme autre bas indice mais leurs propriétés mécaniques sont insuffisantes.

Comme premier intercalaire de feuilletage, on peut choisir notamment une feuille de matière thermoplastique en éthylène vinylacétate (EVA) ou encore en polyuréthane (PU), en polyvinylbutyral (PVB) On préfère une telle feuille à résine pluri ou mono-composants réticulable thermiquement (époxy, PU) ou aux ultraviolets (époxy, résine acrylique) pour l'application du film bas indice.

Le premier intercalaire de feuilletage est de préférence submillimétrique, son épaisseur n'influe pas sur la qualité de lamination du film bas indice. Pour chaque EVA ou PVB, on préfère une épaisseur de moins de 0,5mm, notamment de 0,4mm environ (un feuillet) pour réduire le flou. Le flou du premier intercalaire de feuilletage est par exemple d'au plus 2° et même d'au plus 1,5°.On peut citer l'EVASafe039 de la société Brigdestone. On peut citer le PVB RB41 de flou de moins de 1,5% vendu par la société Solutia.

Le vitrage lumineux peut comprendre une zone transparente (centrale ou périphérique), sans extraction ou élément additionnel, dans la zone transparente le flou du vitrage lumineux est de préférence d'au plus 2,5°. La TL dans la zone transparente est de préférence d'au moins 85% et même d'au moins 88%.

Le premier intercalaire de feuilletage peut être clair, extraclair, voire neutre en couleur.

De manière avantageuse, en particulier pour une application bâtiment, le premier intercalaire de feuilletage comprend de l'EVA en contact avec le film bas indice car la Demanderesse a constaté alors une meilleure adhésion du film bas indice avec l'EVA.

e2 est d'au moins 600nm pour un meilleur guidage. Un film fluoropolymère est aisément disponible à partir de 50µm.

Pour un meilleur assemblage au verre de guidage, le film bas indice peut présenter une première surface principale en regard de la face interne et en contact avec le premier intercalaire de feuilletage et une deuxième surface principale en regard de la deuxième face principale, dite face externe, la première surface principale est traitée par traitement de surface promoteur d'adhésion, de préférence un traitement corona.

La deuxième surface principale peut être également de préférence traitée par traitement de surface promoteur d'adhésion, de préférence un traitement corona pour une meilleure adhésion avec l'élément additionnel fonctionnel ou décoratif ou tout autre élément intercalé.

Dans un premier mode de réalisation avantageux :
- un deuxième intercalaire de feuilletage polymérique en contact adhésif avec la deuxième surface principale qui est de préférence traitée par un promoteur d'adhésion notamment par traitement corona, éventuellement teinté dans la masse, de préférence à base de matière thermoplastique identique au premier intercalaire de feuilletage, notamment en EVA (notamment pour une application bâtiment)
- un deuxième substrat verrier, en verre minéral ou organique, lié au deuxième intercalaire de feuilletage par une face dite de collage (généralement en contact adhésif sauf si autre élément intercalé)
   le deuxième intercalaire et/ou le deuxième substrat verrier formant l'élément additionnel ou portant l'élément additionnel.

Comme deuxième intercalaire de feuilletage, on peut choisir notamment une feuille de matière thermoplastique en éthylène vinylacétate (EVA). en polyuréthane (PU), en polyvinylbutyral (PVB) On préfère une telle feuille à résine pluri ou mono-composants réticulable thermiquement (époxy, PU) ou aux ultraviolets (époxy, résine acrylique) pour couvrir le film bas indice.

On peut citer les produits dénommés Saflex® de la société Solutia, teinté ou clair, extraclair.

De préférence la nature, et l'épaisseur du deuxième intercalaire de feuilletage sont identiques à la nature, et l'épaisseur du premier intercalaire de feuilletage notamment en EVA (notamment pour une application bâtiment).

Dans ce premier mode de réalisation, en particulier pour une application véhicule (toit en particulier), le premier intercalaire de feuilletage comprend une première feuille de PVB en contact adhésif avec la face interne et une première feuille d'EVA qui est en contact adhésif avec le film bas indice (via sa première surface principale) et le deuxième intercalaire de feuilletage comprend une deuxième feuille de PVB en contact adhésif avec la face de collage et une deuxième feuille d'EVA qui est en contact adhésif avec le film bas indice (via sa deuxième surface principale).

De préférence pour un vitrage de véhicule, le verre de guidage est d'épaisseur inférieure à 3mm. Le deuxième substrat verrier, notamment en verre minéral, est d'épaisseur inférieure à 3mm notamment identique.

De préférence pour un vitrage de bâtiment, le verre de guidage est d'épaisseur de 4 à 6,5mm, le deuxième substrat verrier, en verre minéral, est d'épaisseur de 4 à 6,5mm notamment identique.

Entre le verre de guidage et le deuxième substrat verrier, notamment minéral, ledit deuxième intercalaire de feuilletage peut être :
- transparent notamment clair ou extraclair,
- ou diffusant (en volume plutôt qu'une texturation de surface) ou porteur d'une couche diffusante par exemple, une encre, une couche imprimée, par exemple locale, et faisant partie ou formant les moyens d'extraction si l'isolateur optique (le film bas indice) est discontinu.

Le deuxième substrat verrier (souple, rigide ou semi rigide) en verre minéral peut être clair, extraclair ou même diffusant ou porteur d'un élément diffusant (dépôt, film rapporté) par exemple de l'autre côté de sa face de collage avec le deuxième intercalaire.

Pour un vitrage de véhicule, notamment un toit vitré, le deuxième intercalaire de feuilletage est teinté et/ou le deuxième substrat verrier, de préférence en verre minéral, est teinté et le mieux est que le deuxième intercalaire de feuilletage et le deuxième substrat verrier soient teintés. L'épaisseur des substrats verriers, en verre minéral de préférence, est de préférence d'au plus 3mm. Un tableau 1 ci-dessous donne des exemples de verre vendu par la Demanderesse. Ils sont adaptés à tous les vitrages d'un véhicule, qu'ils soient trempés ou feuilletés. Le verre SGS THERMOCONTROL ® Absorbing/ Venus améliore le confort thermique en absorbant la charge énergétique dans la masse du verre. Ces verres sont divisés en deux catégories : « Vision » (Transmission lumineuse>70%) et « Privacy » (Transmission lumineuse <70%).

**Tableau 1**

| Type de verre | TL (%) | TE (%) | RE (%) |
|---|---|---|---|
| SGS THERMOCONTROL® Venus Green 55 | 49 | 27 | 7 |
| Haute Performance teinté vert // Verre Clair | 28 | 16 | 3 |
| SGS THERMOCONTROL® Venus Green 35 | 35 | 22 | 5 |
| SGS THERMOCONTROL® Venus Grey 10 | 10 | 8 | 1 |
| SGS THERMOCONTROL® Absorbing TSA3+ | 71 | 44 | 18 |
| Verre standard vert | 78 | 53 | 25 |

Le verre « Vision » est adapté à tous les types de vitrage dans le véhicule: vert / bleu / gris et assure une transmission énergétique réduite (TE). La couleur la plus appréciée à cette fin est le vert. Elle a été choisie en raison de son aspect neutre qui n'affecte pas l'harmonie des couleurs d'un véhicule.

Le verre « Privacy » est un vitrage teinté dans la masse pour le confort thermique et l'intimité. C'est un vitrage surteinté vert foncé ou gris foncé. Pour assurer l'intimité, ce vitrage présente des valeurs de transmission lumineuse qui sont au-dessous de 70%, généralement autour de 55% ou moins. En raison de sa teinte foncée, ce type de verre assure aussi une faible transmission UV (les rayons UV peuvent causer des irritations de la peau).

Dans la plupart des pays, le verre Vénus / Privacy est adapté aux vitrages latéraux arrière (après le pilier B), lunette arrière et toit. La seule exception est les Etats-Unis, où les vitrages surteintés sont interdits sur les véhicules légers (sauf toit ouvrant) et, par conséquent, ils ne sont utilisés que sur les véhicules utilitaires (après le pilier B). L'application sur des toits ouvrants est acceptée dans le monde entier, quel que soit le type de voiture.

La législation européenne actuelle impose par exemple une transmission lumineuse minimum de 75% sur les pare-brise et de 70% sur les portes avant.

SGS THERMOCONTROL ® Venus est constitué de vitrage surteinté de couleur gris foncé ou vert foncé. Ils ont tous les avantages thermiques du verre de type « Vision » (SGS THERMOCONTROL ® Type) avec une protection solaire améliorée:
- des valeurs plus faibles en transmission énergétique (par rapport à toutes les autres solutions de verre),
- sa couleur foncée bloque également le rayonnement UV, qui est responsable de l'irritation de la peau et la décoloration de l'habitacle,
- offre une plus grande intimité pour les passagers du véhicule (il est difficile de voir à travers le verre depuis l'extérieur).

Le deuxième substrat verrier (feuilleté par le deuxième intercalaire) peut aussi être en verre organique, notamment souple, comme :
- un poly(téréphtalate d'éthylène) (PET) de préférence feuilleté avec PVB ou EVA, PET fonctionnel (teinté, diffusant)
- ou un polyester éventuellement avec une couche « dure « telle qu'un siloxane,
- ou encore un PU thermodurcissable feuilleté avec un deuxième intercalaire thermoplastique PU comme décrit dans le document EP132198.

Le deuxième substrat verrier peut aussi être en verre organique (rigide, semi rigide) comme un polyméthacrylate de méthyle (PMMA) - de préférence avec intercalaire de feuilletage PU-, un polycarbonate (PC) - de préférence avec intercalaire de feuilletage PVB.

La face opposée à la première face (de feuilletage le cas échéant) ou la face de collage peut être libre, ou à moins accessible et/ou sert pour l'assemblage.

Dans ce premier mode de vitrage feuilleté, la face de collage du deuxième substrat, de préférence en verre minéral, peut être revêtue d'une couche décorative et/ou de masquage notamment un émail et/ou une peinture (laque) ou une couche réfléchissante, périphérique et du côté du couplage optique (cadre), ou répartie et même couvrant sensiblement la face de collage.

Et/ou la face opposée à la face de collage du deuxième substrat, de préférence en verre minéral, peut être revêtue d'une couche décorative et/ou de masquage notamment un émail et/ou une peinture (laque) ou une couche réfléchissante, périphérique et du côté du couplage optique (cadre), ou répartie et même couvrant sensiblement la face opposée à la face de collage.

Sous la peinture (laque), il peut y avoir un primaire d'adhésion transparent de préférence.

Alternativement on peut avoir la séquence suivante: verre de guidage/ premier intercalaire de feuilletage/ film bas indice/deuxième intercalaire de feuilletage (PVB) avec peinture ou encre décor / deuxième substrat verrier (transparent, teinté)).

Un vitrage laqué feuilleté avec une éventuelle sous couche primaire d'adhésion est décrit dans le document WO2009/081077. Afin d'optimiser l'adhésion entre la peinture et une éventuelle feuille intercalaire de feuilletage polymère, on soumet de préférence la peinture à l'action d'un plasma, notamment par un traitement du type décharge couronne, avant traitement thermique. Dans le même but, il est également possible de déposer sur la peinture des silanes, par exemple par pulvérisation ou chiffonnage. Ces traitements permettent d'utiliser des peintures, notamment des laques, dont l'adhésion avec les feuilles intercalaires polymères est naturellement faible. Ils génèrent néanmoins un surcoût et ne sont de ce fait pas préférés.

La transparence du film bas indice peut permettre en particulier de préserver la vision au travers du vitrage lumineux ou encore la teinte conférée par l'élément additionnel teinté.

La transparence du film bas indice permet en particulier de préserver la vision d'un élément décor, par exemple une peinture (notamment une laque) notamment sur le deuxième substrat verrier (et/ou d'un émail sur le deuxième substrat verrier), émail ou peinture (laque) répartie sur une surface du deuxième substrat verrier (face de collage ou face opposée), couvrant sensiblement cette surface ou en motifs discrets ou encore en bordure (bandes latérales et/ou longitudinales, cadre).

La transparence est prise ici au sens large, impliquant une vision au travers, le film bas indice pouvant être incolore ou teintée, couleur neutre ou couleur vive. Le film bas indice peut même être ajusté en fonction de la teinte de l'élément additionnel teinté, notamment deuxième substrat verrier isolé et/ou du deuxième intercalaire de feuilletage lui-même teinté pour un complément de couleur. Le film bas indice peut être par exemple ajusté en fonction de la couleur de la peinture et/ou de l'émail utilisé à des fins décoratives, pour un complément de couleur.

La peinture ou l'émail est généralement opaque mais peut alternativement laisser passer plus de lumière par exemple appliquée en couche fine et/ou en ajustant le taux de charges dans le liant.

Le film bas indice peut être teinté par nature (de la matrice) et/ou par exemple par ajout d'additifs colorants.

Par simplicité, on peut préférer un film bas indice incolore.

Dans ce premier mode, la face de collage du deuxième substrat, de préférence en verre minéral, ou la face opposée peut comporter une couche diffusante (dépôt, élément notamment plastique rapporté notamment collé avec une colle optique) et/ou ledit deuxième substrat est diffusant et/ou encore un élément diffusant est entre le film bas indice et la deuxième intercalaire de feuilletage.

On peut avoir la séquence suivante: premier intercalaire de feuilletage/ film bas indice/deuxième intercalaire de feuilletage (PVB) avec peinture ou encre diffusante/ deuxième substrat verrier (transparent ou teinté).

Dans un autre mode de réalisation, le premier substrat verrier en verre minéral est remplacé par un premier substrat verrier organique, de préférence PMMA ou PC, et de préférence le vitrage lumineux comprend en outre :
- un deuxième intercalaire de feuilletage polymérique en contact adhésif avec la deuxième surface principale, de préférence traitée par un promoteur d'adhésion notamment par traitement corona,
- un deuxième substrat verrier, de préférence en verre minéral ou en verre organique, lié au deuxième intercalaire de feuilletage par une face dite de collage,
le deuxième intercalaire et/ou le deuxième substrat verrier formant l'élément additionnel ou portant l'élément additionnel.

Par ailleurs, le film bas indice (au-dessus de l'intercalaire) selon l'invention peut être continu occuper sensiblement entièrement la face interne (à un margeage près notamment).

De préférence, le premier intercalaire de feuilletage et le film bas indice sont en retrait de la tranche dite de couplage du verre de guidage, laissant une zone (ou bande) périphérique libre. Le guidage dans cette zone est le plus élevé possible mais des rayons à fort angle peuvent tout de même s'extraire formant des points chauds si la deuxième face est visible (sans profilé de montage du vitrage etc). Aussi en outre, le support (de préférence opaque) de source de lumière (notamment une carte de circuit imprimé dite PCB qui est support des diodes), et/ou un profilé porteur du support PCB, peut être agencé en regard de cette zone périphérique et de préférence n'est pas en contact optique, avec le verre de guidage. Le support PCB (et/ou le profilé porteur de préférence métallique) sert d'écran.

De préférence, le premier intercalaire de feuilletage, le film bas indice, le deuxième intercalaire de feuilletage sont en retrait de la tranche dite de couplage du verre de guidage, dans une gorge entre la première face et la face de collage du deuxième substrat verrier, de préférence minéral. Le guidage dans cette zone est le plus élevé possible mais des rayons à fort angle peuvent toute de même s'extraire formant des points chauds. Aussi en outre, le support (de préférence opaque) de source de lumière (notamment une carte de circuit imprimé dite PCB qui est support des diodes), et/ou un profilé porteur du support de source (support PCB), peut dépasser dans cette gorge et de préférence n'est pas en contact optique, avec la première face. Le support PCB (et/ou le profilé porteur de préférence métallique) sert d'écran.

A minima, le film fluoropolymère peut s'étendre uniquement entre la tranche de couplage et le bord (le plus proche de la tranche de guidage) des moyens d'extraction de lumière. Par simplicité il couvre la face interne en étant éventuellement en retrait de la tranche de couplage comme décrit précédemment.

Par ailleurs, le vitrage feuilleté peut avoir la configuration suivante : la tranche du verre de guidage comporte un évidement marginal traversant dans l'épaisseur où est logée la source, ou le deuxième substrat est dépassant de la tranche de couplage de la première feuille, créant un décrochement latéral du vitrage.

Le verre de guidage comporte de préférence un évidement périphérique (local, sur une fraction de la longueur de la première tranche, latérale ou longitudinale) et/ou le deuxième substrat verrier dépasse de la tranche de guidage et la source de lumière (de préférence ensemble de diodes) sur un support, comme une carte à circuit imprimé dite support PCB (de diodes), dans l'évidement périphérique ou la zone dépassante, ne dépasse pas de la tranche du deuxième substrat verrier et même du plan de la deuxième face. Et de préférence le support de source (PCB) est fixé (directement ou via une embase) à la face de collage dans la zone dépassante ou l'évidement périphérique et/ou dans une gorge entre la première face et la face de collage notamment si source (diodes) à émission latérale, et/ou encore fixé à la tranche de couplage par une colle optique ou un adhésif double face transparent.

Notamment pour une application bâtiment, le deuxième substrat verrier peut dépasser de la tranche de guidage par décalage avec le premier substrat verrier, en étant de taille identique ou supérieure pour garder les tranches opposées alignés (à 1mm près par exemple). Notamment pour une application véhicule (toit vitré lumineux), le verre de guidage comporte un évidement périphérique, local.

On peut préférer un support PCB métallique pour la dissipation thermique ou on le fixe par l'arrière à une embase métallique de préférence ne dépassant de la tranche de guidage et même du plan de la deuxième face. Cette embase peut être une barrette, de section en L voire en U.

La tranche du deuxième substrat peut être libre ou liée à une encapsulation polymérique ou encore en regard d'un profilé de montage du vitrage lumineux (métal, bois, plastique) par exemple de section en L ou en U sur l'épaisseur du vitrage lumineux.

Alternativement ou cumulativement au support (PCB) de la source servant de masquage des points chauds comme précité, le vitrage lumineux selon l'invention sous forme d'une vitrage feuilleté avec le deuxième intercalaire de feuilletage et le deuxième substrat verrier, peut comprendre un élément de masquage de la source de lumière et/ou des points chauds (notamment via la face de collage, à proximité de la zone d'injection), - dans une application de véhicule, et/ou de masquage de la fixation du vitrage à la carrosserie du véhicule par la deuxième face-, l'élément de masquage pouvant être
- de préférence une couche de masquage qui est un émail suffisamment opaque, sur la périphérie de la face de collage et/ou de la face opposée à la face de collage, et/ou d'une face rapportée en regard de la première face et éventuellement sur la périphérie de la deuxième face voire une couche réfléchissante sur la périphérie de la face de collage et/ou de la face opposée à la face de collage ou d'une face rapportée en regard de la première face,
- ou, en particulier en application véhicule, une encapsulation polymérique (suffisamment opaque noire), coté deuxième face et/ou côté face opposée à la face de collage et éventuellement sur la périphérie de la deuxième face,

Cet élément de masquage peut s'étendre plus que le support (PCB) de source, et être entre la face de collage et le deuxième intercalaire de feuilletage. Cet élément peut correspondre audit élément additionnel.

Le film bas indice peut être discontinu et les moyens d'extraction de lumière sont une laque ou une peinture sur le premier intercalaire de feuilletage.

Dans une configuration, le film bas indice (sur l'intercalaire de feuilletage) couvre partiellement le verre de guidage, présentant ainsi une première zone dite d'isolation optique, première zone d'isolation optique de préférence plus proche de la source de lumière que les moyens d'extraction. Une zone, dite zone lumineuse (d'extraction), adjacente et de préférence contigüe à la première zone d'isolation optique comporte les moyens d'extraction, notamment formés par une couche diffusante. Ces moyens d'extraction (notamment locaux) sont par exemple :
- directement sur la face interne,
- ou directement sur l'intercalaire (ou un deuxième intercalaire pardessus), première ou deuxième surface, (notamment locaux), par exemple un PVB imprimé,
- ou directement sur la face de collage,
- ou un film diffusant inséré (plastique etc) notamment sous la face de collage ou la face opposée.

La couche diffusante peut être une peinture, notamment une laque, ou un émail de préférence sur la face de collage au moins dans la zone lumineuse.

Eventuellement le film bas indice est discontinu présentant ainsi une deuxième zone dite d'isolation optique, la zone lumineuse d'extraction étant entre la première et la deuxième zone d'isolation optique notamment contigüe à la première et la deuxième zone d'isolation optique.

Le vitrage lumineux peut comprendre un système électrocommandable à propriétés optiques variables, notamment à cristaux liquides, à valve optique, électrochrome, même thermochrome, en dessous l'isolateur optique ou de préférence au-dessus de l'isolateur optique.

Dans un vitrage feuilleté selon l'invention, on peut avoir le système suivant : ledit premier intercalaire de feuilletage/ film bas indice/ deuxième intercalaire de feuilletage/support (film plastique)/ première électrode/ système optique électrocommandable /deuxième électrode/support (film plastique)/ troisième intercalaire de feuilletage/deuxième substrat verrier. Comme support on peut choisir un poly(téréphtalate d'éthylène) dit PET.

Comme système optique électrocommandable on peut citer : cristaux liquides, valve optique (« SPD » en anglais), électrochrome, même thermochrome.

On peut citer les cristaux liquides décrits dans les demandes EP964288, EP0823653A1, EP0825478A1, EP0964288A3, EP1405131.

La ou les zones lumineuses peuvent être :
- à fonction décorative, lumière d'ambiance (en un ou plusieurs motifs de forme et/ou de couleur distinctes, jointifs ou espacés),
   et/ou
- fournir un éclairage architectural,
- fournir un éclairage directionnel (moyens d'extraction concentrateur de lumière),
- avec un ou des motifs de signalisation et/ou à visée commerciale (LOGO etc) de forme et/ou de couleur distinctes, jointifs ou espacés.

Pour l'extraction de la lumière on emploie des moyens de diffusion, formés soit par un traitement superficiel du verre du type sablage, attaque acide, dépôt d'émail ou de pâte diffusante, soit par un traitement dans la masse du verre de type gravure laser.

Un produit (intermédiaire) correspondant au vitrage lumineux selon l'invention sans les moyens d'extraction de lumière peut être vendu à l'utilisateur ou client final lequel peut lui-même réaliser les moyens d'extraction de lumière, notamment effaçables ou amovibles, de préférence sur la deuxième face; par exemple par un sticker ou encore un stylo marqueur adapté.

Les moyens d'extraction diffusants, sont sous forme d'une texturation de surface, notamment de la face interne ou externe, ou d'une couche diffusante notamment un émail, une peinture, une encre (blanc de préférence ou autre en fonctions des zones des besoins) ou encore un sticker diffusant (amovible).

Les moyens d'extraction peuvent former un concentrateur de lumière (émission de lumière dirigée) par exemple :
- moyen réfléchissant en regard de moyen d'extraction pour réfléchir les rayons extraits selon une direction donnée comme décrit dans FR2989176,
- lentille comme décrit dans le document WO2005/018283,
- premier substrat verrier en biseau notamment avec un angle aigu inférieur ou égal à 45°, décrit dans le document FR2987043 (notamment exemple en figure 2) avec réflecteur qui est une surface réfléchissante et/ou polie.

Les moyens d'extraction (tout ou partie) peuvent être sur la face externe opposée à la face interne plutôt que sous le premier intercalaire ou sous le film bas indice occupant sensiblement toute la face interne.

Selon une caractéristique, une couche diffusante est blanche, notamment une peinture ou un émail, en présentant de préférence une clarté L* d'au moins 50, fait partie ou forme les moyens d'extractions à l'opposé de l'intercalaire de feuilletage ou du côté du premier intercalaire de feuilletage. La couleur est définie de manière connue par les paramètres L*, a* et b* est mesurée par un spectrocolorimètre.

En cas de couche diffusante côté feuilletage, le premier intercalaire peut recouvrir la couche diffusante ou même une zone dépolie.

Le film bas indice peut être agencé (découpée) uniquement adjacent et même contigüe à la couche diffusante (de part et d'autre).

La couche diffusante qui est côté feuilletage, est de préférence avec un facteur de réflexion diffuse supérieur ou égal à 50%, voire à 80%.

La couche diffusante qui est côté opposé au feuilletage, de préférence est de facteur de transmission diffuse supérieur ou égal à 50%, voire à 80%.

La couche diffusante peut être un ensemble de motifs diffusants qualifié de réseau diffusant tout particulièrement pour une zone lumineuse de grande taille souhaitée la plus uniforme possible. Ce réseau diffusant peut être formé de motifs diffusants par exemple de largeur (moyenne) de 0,2mm à 5mm. Pour former ce réseau on peut texturer une couche.

Dans la ou les zones lumineuses (du côté opposé à la face avec moyen d'extraction tel que l'émail et/ou du côté de la face avec moyen d'extraction tel que l'émail), l'éclairage peut être du type lambertien et non directionnel, suivant un axe de propagation de la lumière. Ainsi, la luminance a l'avantage d'être sensiblement égale quel que soit l'angle d'observation.

De préférence, le verre de guidage revêtu des moyens d'extraction, notamment émail, présente une transmission lumineuse inférieure à 45% voire à 40% ou même à 35%.

Les moyens d'extraction, notamment émail, s'étendent, par exemple sur la totalité d'une face du verre ou substrat de guidage, de manière discontinue ou selon des formes géométriques éparses aux lignes courbes et/ou droites. L'émail est par exemple à géométrie fractale.

Selon une autre caractéristique, les moyens d'extraction s'étendent de manière discontinue et délimite des zones sombres notamment des motifs de formes géométriques éparses aux lignes courbes et/ou droites, notamment de longueur (plus grande dimension) au moins centimétrique.

La zone lumineuse peut couvrir une partie de la surface, laisser ainsi au moins une première zone sombre, c'est-à-dire non lumineuse peut couvrir une partie de la surface, laisser ainsi au moins une première zone, zone sombre qui est choisie parmi une zone transparente (clair de vitre...) ou une zone décorative par un revêtement opaque et/ou coloré, ou encore une zone réfléchissante notamment miroir par exemple formée par une argenture couverte par une peinture de protection.

Le miroir est par exemple le produit SGG Miralite de la société SAINT-GOBAIN GLASS, avec une peinture de protection à l'oxydation, l'argenture du miroir étant disposée :
- sur la même face que les moyens d'extraction (émail, peinture) ou sur une face opposée,
- du côté du feuilletage.

En variante, le miroir est à base de chrome tel que le produit SGG Mirastar de la société SAINT-GOBAIN GLASS, le chrome étant
- sur la même face que les moyens d'extraction (émail, peinture) ou sur une face opposée
- du côté du feuilletage ou sur la face externe ou face extérieure.

La largeur maximale, largeur correspondant à la plus petite dimension surfacique de cette zone lumineuse (de toute forme possible), peut être de préférence inférieure à 200 mm voire inférieure ou égale à 100 mm, notamment pour laisser une surface de zone sombre importante. La largeur est constante ou variable.

La zone lumineuse peut être une zone périphérique, notamment le long d'au moins un bord, selon par exemple au moins une bande ou un dessin, tandis que la zone sombre est davantage centrale (et plus éloignée de la source de lumière).

La couche diffusante, notamment émail, peut être une couche continue en surface, de largeur inférieure à 200 mm, voire à 100 mm et encore plus préférentiellement inférieure ou égale à 50 mm, ou être discontinue et formée d'un ensemble de motifs fins, de largeur (dimension minimale du motif) inférieure à 200 mm, voire à 100 mm et encore plus préférentiellement inférieure ou égale à 50 mm.

Les motifs d'extraction, diffusants sont par exemple géométriques : bande rectiligne ou courbée, des ronds concentriques, des L. etc. Les motifs sont identiques ou distincts, parallèle entre eux ou non, avec une distance entre eux identiques ou non.

Dans un mode de réalisation préféré, la couche diffusante (tout ou partie des moyens d'extraction) est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes. Pour l'extraction de la lumière on emploie des moyens de diffusion, formés soit par un traitement superficiel de la feuille de verre du type sablage, attaque acide, dépôt d'émail ou de pâte diffusante, soit par un traitement dans la masse du verre de type gravure laser.

La couche diffusante (tout ou partie des moyens d'extraction) peut être composée d'éléments contenant des particules et un liant, le liant permettant d'agglomérer entre elles les particules. Les particules peuvent être métalliques ou des oxydes métalliques, la taille des particules peut être comprise entre 50 nm et 1 µm, de préférence le liant peut être minéral pour une résistance à la chaleur.

La couche diffusante (tout ou partie des moyens d'extraction) peut être composée d'éléments contenant des particules et un liant, le liant permettant d'agglomérer entre elles les particules. Les particules peuvent être métalliques ou des oxydes métalliques, la taille des particules peut être comprise entre 50 nm et 1 µm, de préférence le liant peut être minéral pour une résistance à la chaleur.

Dans un mode de réalisation préféré, la couche diffusante (tout ou partie des moyens d'extraction) est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes.

Par exemple, on choisit une couche minérale diffusante (tout ou partie des moyens d'extraction) d'environ 10 µm.

Avantageusement, une zone lumineuse est un aplat d'émail (donc une zone pleine par opposition à un réseau de motifs ponctuels type points millimétriques) notamment de longueur (plus grande dimension) au moins centimétrique.

Selon une caractéristique, l'émail d'extraction présente la composition suivante :
- entre 20 et 60 % en poids de SiO₂,
- 10 à 45 % en poids de pigments réfractaires, notamment de Ti0₂, notamment de taille micronique
- de préférence pas plus de 20 % en poids d'alumine et/ou d'oxyde de zinc.

Les pigments TiO2 rendent l'émail suffisamment opaque (pour visualiser l'émail à l'état off) et abaissent la TL. Des exemples de composition d'émail d'extraction peuvent être l'émail sous la dénomination Ferro 194011 commercialisé par l'entreprise FERRO, la référence AF5000 commercialisé par la société JM, la référence W30-244-1 commercialisé par Pemco sont très blancs avec une brillance supérieure à 20 et présentent une transmission lumineuse basse, inférieure à 40 %.

On peut souhaiter que la lumière ne se voie que du côté de la face externe. Pour ce faire on peut :
- utiliser un réflecteur ou un élément opaque sur les moyens d'extractions côté feuilletage, (couche diffusante notamment),
- utiliser un réflecteur ou un élément opaque côté feuilletage en regard des moyens d'extractions en face externe
- augmenter suffisamment l'épaisseur de la couche diffusante (côté feuilletage)

On peut utiliser un système d'émail diffusant /d'émail de masquage selon le procédé de vision à sens unique avec des motifs discrets en émail décrit dans le brevet WO2012/172269 ou encore EP1549498.

Comme source de lumière on peut choisir une fibre optique extractrice, avec une face émettrice latérale (couplée à une source de lumière primaire qui est typiquement une diode). On utilise par exemple la fibre optique de 3M dite 3M™ Précision Lighting Elements.

On préfère des diodes. Les diodes peuvent être (pré) encapsulées, c'est-à-dire comprenant une puce semi-conductrice et une enveloppe, par exemple en résine type époxy ou en PMMA, encapsulant la puce et dont les fonctions sont multiples : élément diffusant ou de focalisation, conversion de longueur d'onde. L'enveloppe est commune ou individuelle.

Les diodes peuvent être de préférence simples puces semiconductrices par exemple de taille de l'ordre de la centaine de µm ou du mm. Leur largeur est de préférence inférieure à l'épaisseur du premier substrat verrier surtout si non feuilleté côté deuxième face.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

La diode peut être choisie notamment parmi au moins l'une des diodes électroluminescentes suivantes :
- une diode à émission latérale, c'est-à-dire parallèlement aux (faces de) contacts électriques, avec une face émettrice latérale par rapport au support,
- une diode dont la direction principale d'émission est perpendiculaire ou oblique par rapport la face émettrice de la puce.

Le diagramme d'émission d'une source de lumière peut être lambertien.

De préférence la distance entre les puces et la première feuille est inférieure ou égale à 2 mm et même à 1mm.

Avantageusement, les diodes sont disposées de manière à injecter de la lumière par la tranche du verre de guidage selon deux côtés opposés parallèles.

La lumière extraite du motif d'extraction peut clignoter, changer de couleur grâce à des moyens de pilotage de la source de lumière par exemple un ensemble de diodes émettrices de blanc ou encore de rouge, de vert, de bleu et de préférence également de blanc

Les moyens d'extraction de lumière peuvent être un émail, une laque ou une peinture sur la première surface principale et sous le premier intercalaire de feuilletage.

Les moyens d'extraction de lumière peuvent être sous forme d'une texturation du verre de guidage sur la face externe qui est de préférence une surface libre, ou d'une couche diffusante notamment un émail, une laque ou une peinture

La plupart des LEDs sur le marché ont une émission lambertienne. Plus les contraintes d'acceptance angulaire sont sévères et plus l'ajout d'une optique de collimation aux LEDs s'impose (couteux, problème d'injection et mélange avec LEDs RGB, ...) en l'absence d'usage de film bas indice. Mais ces problèmes d'injection sont d'autant plus critique que le verre de guidage est fin (typiquement lorsque l'épaisseur du premier substrat verrier est <5mm).

Le verre de guidage employé peut être tout type de verre plat, (éventuellement bombé par les procédés de bombage connus de l'homme du métier, lorsqu'il s'agit de revêtir des surfaces courbes). Il peut s'agir de verres monolithiques, c'est-à-dire composés d'une seule feuille de verre minérale, laquelle peut être produite par le procédé « float » permettant d'obtenir une feuille parfaitement plane et lisse, ou par des procédés d'étirage ou de laminage.

A titre d'exemples de matériaux verriers, on peut citer le verre float (ou verre flotté) de composition sodo-calcique classique, éventuellement durci ou trempé par voie thermique ou chimique, un borosilicate d'aluminium ou de sodium ou toute autre composition.

Le verre du verre de guidage peut être clair, extra-clair, à très faible teneur en oxyde(s) de fer. Il s'agit par exemple des verres commercialisés dans la gamme « DIAMANT » par SAINT-GOBAIN GLASS.

Le substrat du verre de guidage peut être un vitrage en verre silicosodocalcique, notamment extraclair, peut présenter :
- une transmission du rayonnement lumineux supérieure ou égale à 91% voire supérieure ou égale 92% ou même 93% ou 94% à 550 nm ou de préférence sur toute la gamme visible,
- et/ou une réflexion du rayonnement lumineux inférieure ou égale à 7%, voire inférieure ou égale à 4%, à 550 nm ou de préférence sur toute la gamme visible.

La tranche couplée optiquement peut être façonnée, façonnage automobile (arrondi), droit.

Le verre de guidage peut avoir été traité thermiquement, à une température supérieure ou égale à 450°C de préférence supérieure ou égale à 600°C, notamment est même un verre trempé, bombage trempé.

L'épaisseur du premier substrat verrier est de préférence comprise entre 2 et 19mm, de préférence entre 4 et 10mm, plus particulièrement entre 5 et 9mm.

A titre d'exemples, le vitrage lumineux est destiné à :
- un vitrage de bâtiment, comme une façade éclairante, une fenêtre éclairante, un plafonnier, une dalle de sol ou murale éclairante, une porte vitrée éclairante, une cloison éclairante, un plafond éclairant, une marche d'escalier, un garde-corps, une balustrade, un comptoir,
- un véhicule de transport, comme une vitre latérale éclairante ou un toit vitré éclairant ou une fenêtre éclairante ou une lunette arrière, une porte vitrée éclairante, notamment de transport de particuliers, tel que automobile, camion, ou en commun, tel que train, métro, tramway, bus ou de véhicule aquatique ou aérien (avion),
- l'éclairage routier ou urbain,
- un vitrage de mobilier urbain, comme une partie vitrée éclairante d'abribus, de balustrade, de présentoir, d'une vitrine, d'une étagère, d'une serre,
- un vitrage d'ameublement intérieur, comme une paroi éclairante de salle de bains, un miroir éclairant, une partie vitrée éclairante d'un meuble (de préférence vitrage simple),
- une partie vitrée, notamment porte, étagère vitrée, couvercle d'équipement réfrigéré domestique ou professionnel.

Le vitrage lumineux (notamment feuilleté avec verre minéral ou organique), peut faire partie d'un double ou triple vitrage, comme une fenêtre de bâtiment ou de véhicule (train etc) ou une porte de bâtiment ou de véhicule (train etc). On préfère dans ce cas laisser une zone transparente sur la plupart du vitrage lumineux, en particulier zone centrale avec éventuel motif(s) (local) d'extraction. On préfère aussi placer le vitrage lumineux du côté intérieur du bâtiment ou du véhicule.

Le vitrage lumineux (notamment feuilleté avec verre minéral ou organique) peut même faire partie d'un double vitrage d'une porte d'équipement réfrigéré, notamment vertical. On préfère dans ce cas laisser une zone transparente sur la plupart du vitrage lumineux avec un éventuel motif(s) (local) d'extraction. Le vitrage lumineux peut être le plus extérieur de l'équipement.

Le vitrage lumineux peut être en particulier une cloison notamment feuilleté, porte (encadrée ou non, notamment feuilletée), fenêtre, notamment en double ou triple vitrage, vitrage d'ameublement, plafond, garde-corps, panneau mural, marche d'escalier, miroir incorporant un vitrage lumineux selon l'invention.

La cloison peut être fixe ou sous forme de panneaux coulissants, par exemple montés sur des rails. La porte peut être une porte d'intérieur ou d'extérieur ou encore une porte de douche.

Pour un éclairage de cloison, d'étagère, de vitrine de magasin ou de locaux d'une société, la forme géométrique de la combinaison de l'émail et de la surface vitrée transparente correspondra avantageusement au logo de la société.

Le vitrage lumineux selon l'invention peut être destiné à équiper tout véhicule :
- de préférence toit mobile ou fixe d'un véhicule terrestre, notamment automobile, véhicule utilitaire, camion, train, avec une première feuille éventuellement galbée, notamment un vitrage feuilleté,
- vitre latérale d'un véhicule terrestre, notamment automobile, véhicule utilitaire, camion, train, notamment avec l'élément fonctionnel qui est une pièce de maintien d'un système de lève-vitre ou avec le capot enjoliveur,
- pare-brise d'un véhicule terrestre, notamment automobile, véhicule utilitaire, camion, train, notamment avec la ou les zones lumineuses (formant une signalisation « HUD » par exemple) dans la bordure en émail ou à proximité, lunette arrière notamment dans la bordure en émail ou à proximité,
- hublot, pare-brise d'un véhicule aérien,
- vitres de fenêtre, toit, d'un véhicule aquatique, bateau, sous-marin
- vitrage dans un train, un bus notamment monté en double ou triple vitrage.

Dans un véhicule, on ajuste l'extraction/la conversion des rayonnements (ainsi que le type et/ou la position et/ou le nombre des diodes) pour :
- un éclairage d'ambiance, de lecture, notamment visible à l'intérieur du véhicule,
- une signalisation lumineuse notamment visible à l'extérieur :
   - par activation de télécommande : détection du véhicule dans un parking ou autre, indicateur de (dé)verrouillage de portes, ou
   - signalisation de sécurité, par exemple comme feux stop sur l'arrière,
- un éclairage sensiblement homogène sur toute la surface d'extraction (une ou plusieurs zones d'extraction, fonction commune ou distincte).

La lumière peut être :
- continue et/ou par intermittence,
- monochromatique et/ou plurichromatique.

Visible à l'intérieur du véhicule, elle peut ainsi avoir une fonction d'éclairage de nuit ou d'affichage d'informations de toutes natures, de type dessin, logo, signalisation alphanumérique ou autres signalétiques.

On peut réaliser une seule face d'extraction (interne au véhicule de préférence).

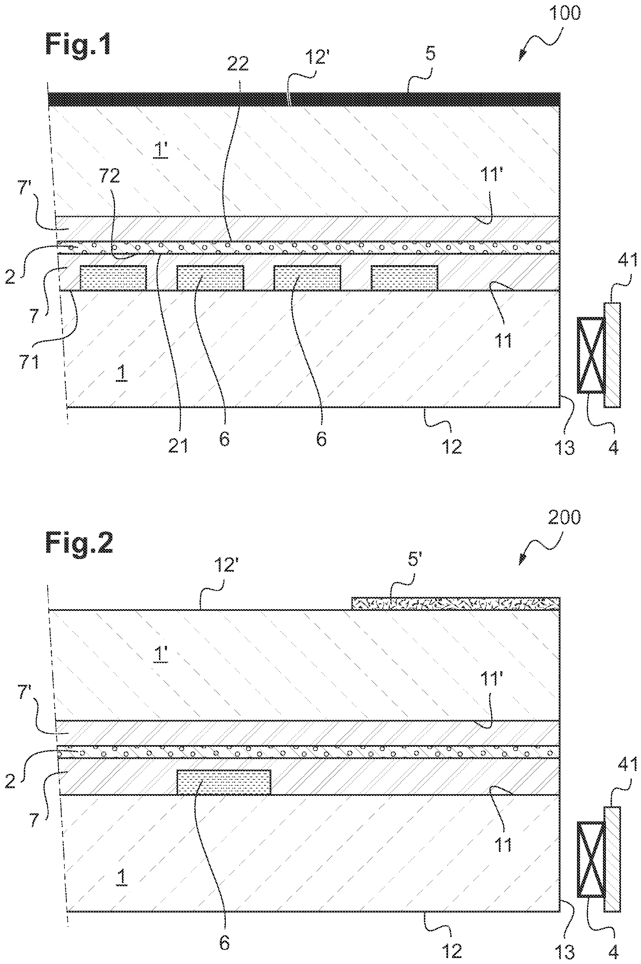

On préfère que la source de lumière en particulier l'ensemble de diodes électroluminescentes soit entièrement en regard (et mieux d'épaisseur inférieure ou égale à l'épaisseur du verre de guidage) et même centré sur la tranche du verre de guidage. Toutefois la source de lumière (les diodes) peut à la limite être au moins partiellement en regard également de l'intercalaire de feuilletage.Les détails et caractéristiques avantageuses de l'invention vont maintenant ressortir des exemples suivants non limitatifs, à l'aide des figures 1 à 10 qui sont des vues schématiques et partielles en coupe de vitrages lumineux avec isolateur optique dans plusieurs modes de réalisation de l'invention.

Les éléments ne sont pas à l'échelle.

### EXEMPLES DE VITRAGES LUMINEUX

La figure 1 montre une vue partielle en coupe d'un vitrage lumineux 100 avec isolateur optique dans un premier mode de réalisation comportant :
- un premier substrat verrier 1, dit verre de guidage, qui est une vitrage ici de forme rectangulaire plan ou en variante bombé, en verre silicosodocalcique clair ou extraclair, (de préférence de 6mm environ par exemple pour le bâtiment ou d'au plus 3mm pour l'automobile), d'indice de réfraction n1 d'environ 1,5 à 550nm, de TL d'au moins 90%, avec une première face principale 11 dite face interne et une deuxième face principales 12 dite face externe et une première tranche 13,
- une source de lumière 4, ici un ensemble de diodes électroluminescentes 4 sur une carte de circuit imprimé dit support PCB 41, couplée optiquement à la tranche 13 dit de guidage du verre de guidage, le verre de guidage guidant la lumière émise par les diodes de préférence distants (espacées ou collés) d'au plus 2mm de la tranche de guidage, diodes de préférence centrées sur la tranche et de largeur inférieure à l'épaisseur du verre 1,
- des moyens d'extraction de lumière 6 associés au verre de guidage ici sur la face interne 11, qui sont une couche diffusante de préférence blanche, de préférence en présentant une clarté L* d'au moins 50, de préférence un émail diffusant, ou en variante un dépoli de la deuxième face ou encore un concentrateur optique, moyens d'extraction ici en plusieurs motifs diffusants, formant une pluralité de zones lumineuses ou une zone lumineuse uniforme si suffisamment proches) ou en variante une zone lumineuse pleine par exemple unique et centrale.

La face interne 11 comporte en outre successivement :
- un premier intercalaire de feuilletage 7 en matière thermoplastique de préférence EVA voire PVB ou PU, ou encore PVB surmonté d'un EVA généralement submillimétrique, transparent par exemple clair, de surface interne 71 en contact adhésif avec la face interne 11 et une surface externe 72,
- un film bas indice 2, de préférence ETFE voire FEP et d'épaisseur au moins 50µm ayant des faces principales 21, 22 traitées par traitement corona, en contact adhésif avec l'EVA 7 de préférence (EVA seul ou EVA sur PVB),
- un deuxième intercalaire de feuilletage 7' en matière thermoplastique de préférence EVA voire PVB, ou PU, ou encore PVB surmonté d'un EVA généralement submillimétrique, transparent par exemple clair, identique au premier intercalaire de feuilletage, de préférence EVA en contact adhésif avec le film bas indice (EVA seul ou EVA sur PVB)
- un deuxième substrat verrier 1', en verre minéral, par exemple identique au verre de guidage avec une face principale de collage 11' coté deuxième intercalaire de feuilletage 7' et une face opposée 12'.

La face opposé à la face de collage 11' porte directement (ou via un primaire d'adhésion) un premier revêtement décoratif et/ou de masquage 5, par exemple une couche continue de peinture et de préférence une laque, colorée (blanc, noir compris) de préférence de couleur distincte des moyens d'extraction 6, ou arrangés en motifs discrets colorés disjoints ou continus en une couleur ou des couleurs distinctes, par exemple fabriqué par masquage ou par sérigraphie. En variante, la face de collage 11' porte ce décor. Le verre de guidage 1 peut être trempé, bombe trempé, ainsi que le deuxième substrat verrier.

L'émail d'extraction 6 présente par exemple la composition suivante :
- entre 20 et 60 % en poids de SiO₂,
- 10 à 45 % en poids de pigments réfractaires, incluant le Ti0₂, notamment de taille micronique
- de préférence pas plus de 20 % en poids d'alumine et/ou d'oxyde de zinc.

Les pigments TiO2 rendent l'émail suffisamment opaque pour visualiser l'émail à l'état off) et abaissent la TL

Des exemples de composition d'émail peuvent être l'émail sous la dénomination Ferro 194011 commercialisé par l'entreprise FERRO, la référence AF5000 commercialisé par la société JM, la référence W30-244-1 commercialisé par Pemco.

L'émail est ici sérigraphié ou en variante imprimé. Les moyens d'extraction peuvent former une pluralité de motifs lumineux par exemple en larges bandes périphériques et/ou motifs plus discrets notamment géométriques. Les motifs lumineux forment un décor, une signalétique, un LOGO, une marque. L'éclairage peut être continu ou clignotant et/ou de couleur variable.

On peut rajouter d'autres diodes sur la tranche opposée de la tranche 13 (non montrée ici) notamment dans le cas d'un vitrage de grande taille et/ou avec plusieurs motifs centimétriques espacés (avec une surface d'extraction grande).

Afin de voir au travers du verre de guidage une partie du fond continu de laque (ou émail ou autre peinture) on peut souhaiter que la zone lumineuse ne soit pas répartie sensiblement sur tout le vitrage (éviter ainsi l'extraction sur toute la face interne porteuse des moyens d'extraction).

La face 12' opposée à la face de collage 11' peut être une surface libre du vitrage lumineux, est visible voire même accessible (au toucher).

Après installation du vitrage lumineux cette surface libre peut être en regard d'une paroi vitrée d'un bâtiment (mur, cloison, plafond, toit) ou même d'un véhicule.

Le vitrage lumineux 100 forme par exemple pour former une cloison, un plafond, un sol, un panneau décoratif mural.

Le deuxième substrat 1' revêtu de laque 5 peut être le produit Planilaque Evolution ou Décolaque de la Demanderesse, avec une large gamme de teintes disponibles (chaudes, froides métallisées).Une formulation de peinture peut être déposée selon le procédé du rideau. Le solvant est du xylène ou en variante aqueux. La laque après séchage comprend par exemple les ingrédients suivants :
- un liant sous forme de résine polyuréthane obtenue par réticulation, par un isocyanate non aromatique, de résines acryliques hydroxylées issues de la polymérisation d'un styrène acrylique
- des matières minérales (pigments et charges) à hauteur de 55% en masse.

On peut même insérer un système électrocommandable à propriétés optiques variables soit la séquence suivante sur le film bas indice : deuxième PVB ou EVA ou PVB+EVA/ premier support transparent d'électrode tel que du PET/ première électrode transparente notamment ITO ou multicouche argent/couche de cristaux liquides/ deuxième électrode transparente notamment ITO ou multicouche argent/ deuxième support transparent d'électrode tel que du PET/ troisième PVB ou EVA ou PVB+EVA. A l'état off, le système est opaque et à l'état on le système est transparent et révèle le premier revêtement 5 en laque décorative.

La figure 2 montre une vue partielle en coupe d'un vitrage lumineux 200 avec isolateur optique dans un deuxième mode de réalisation.

Seules les différences par rapport au premier mode sont décrites. Le vitrage lumineux 200 diffère comme suit.

La face 12' opposée à la face de collage 11' comporte un émail opaque périphérique 5' par exemple émail de masquage (noir, foncé) ou décor.

Les moyens d'extraction 6 forment une seule zone lumineuse par exemple une bande.

En variante cet émail est sur la face de collage ou le deuxième intercalaire est imprimé d'une couche de masquage.

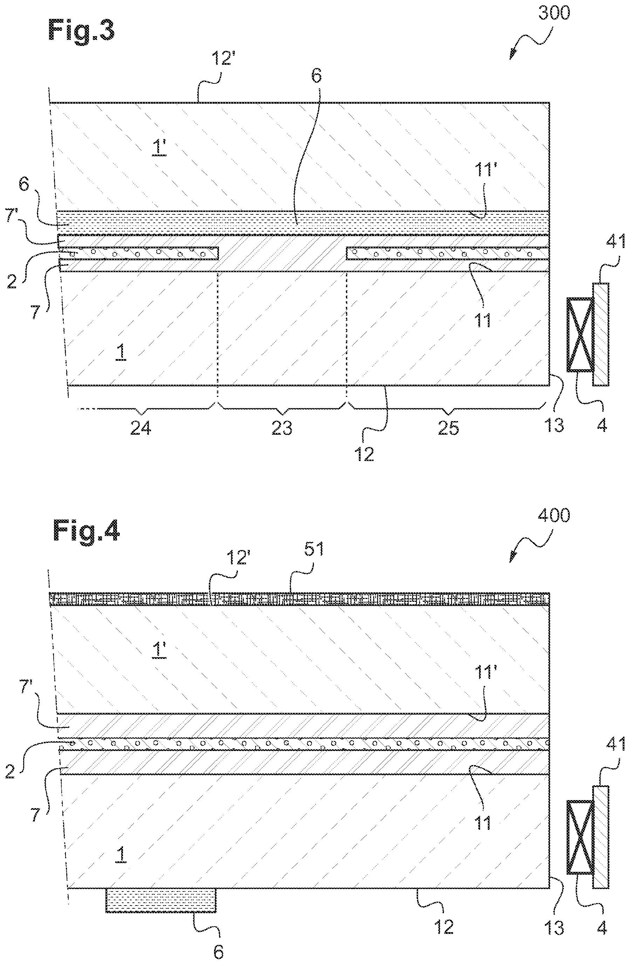

La figure 3 montre une vue partielle en coupe d'un vitrage lumineux 300 avec isolateur optique dans un troisième mode de réalisation.

Seules les différences par rapport au premier mode sont décrites. Le vitrage lumineux 300 diffère comme suit.

Le film bas indice 2 est discontinu (formant une première et deuxième zone d'isolation optique 24 et 25 séparées par une discontinuité 23 ici centrale), laissant une zone ici centrale où le premier intercalaire de feuilletage 7 est directement en contact avec le deuxième intercalaire de feuilletage 7' alors de préférence clair, extraclair. La discontinuité 23 peut être entourée de l'isolateur optique 7 (en un motif fermé).

On peut avoir une pluralité discontinuités à façon. Lors de la fabrication il est possible de rajouter une épaisseur de matière intercalaire de feuilletage dans la discontinuité (en plus de feuillet(s) pour le premier intercalaire et de feuillet(s) pour le deuxième intercalaire) pour faciliter la formation de la zone pleine de feuilletage.

Les moyens d'extraction 6 sont formés par la peinture ou laque 6 choisie blanche de préférence sur la face de collage 11' (ou alternativement un émail blanc) voire la face opposée. On peut citer par exemple la peinture extrablanc du produit Planilaque Evolution de la société Demanderesse avec comme pigment majoritaire du TiO2. L'épaisseur est typiquement entre 40 et 60µm.

Alternativement, sur la face de collage 11' la laque est blanche (comme le produit extrablanc Planilaque Evolution) dans la zone en regard de la discontinuité. Ailleurs il peut exister une ou de zones de couleurs par exemple vives.

Alternativement, une face du premier ou du deuxième intercalaire de feuilletage 7 ou 7' comprend une couche diffusante, par exemple est un PVB imprimé de préférence localement au moins dans cette zone ici centrale.

La figure 4 montre une vue partielle en coupe d'un vitrage lumineux 400 avec isolateur optique dans un quatrième mode de réalisation.

Seules les différences par rapport au deuxième mode sont décrites. Le vitrage lumineux 400 diffère comme suit.

Le deuxième substrat 1' comporte sur toute sa face 12' opposée à la face de collage 11' un élément teinté 51 par exemple un film plastique tel qu'un PET teinté collé par une colle optique ou par une intercalaire de feuilletage (PVB etc), notamment clair, extraclair.

Les moyens d'extraction 6 sont déplacés côté deuxième face (externe) 12. Il peut s'agir des moyens d'extraction amovibles ou effaçables comme un sticker ou une encre. Bien sur, on peut combiner des moyens d'extraction permanents et provisoires.

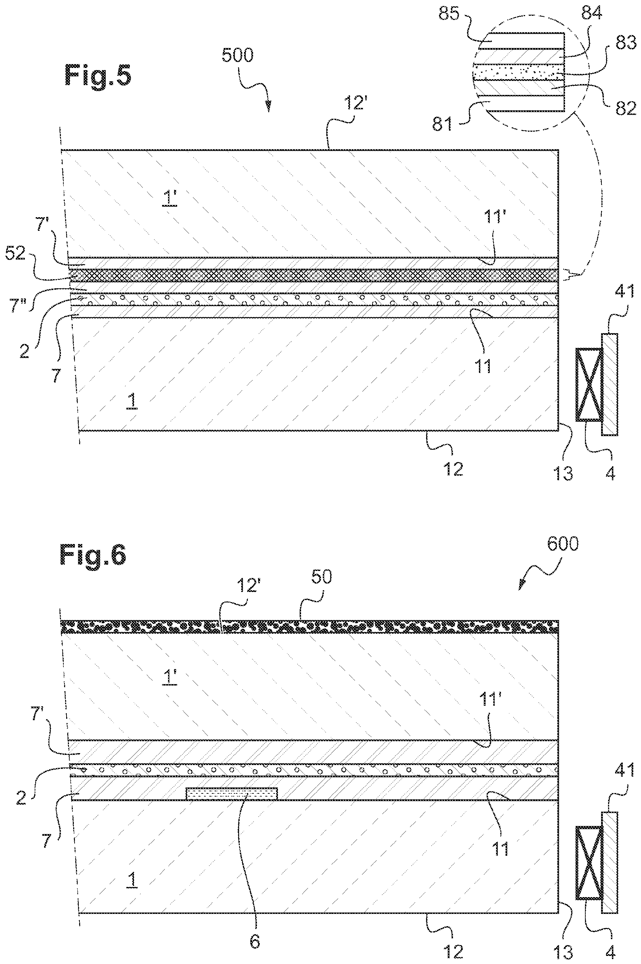

La figure 5 montre une vue partielle en coupe d'un vitrage lumineux 500 avec isolateur optique dans un cinquième mode de réalisation.

Seules les différences par rapport au premier mode sont décrites. Le vitrage lumineux 500 diffère comme suit.

En remplacement (ou en variante en addition) de la peinture décorative 5, on insère un système électrocommandable à propriétés optiques variables 52, ici à cristaux liquides, entre la face interne 11 et la face de collage 11', soit la séquence suivante:
- le premier intercalaire de feuilletage 7 (EVA voire PVB ou PVB+EVA)/ le film bas indice 2/ deuxième intercalaire de feuilletage 7" (EVA voire PVB ou PVB+EVA)/un premier support transparent d'électrode 81 tel que du PET / première électrode transparente 82 notamment ITO (oxyde d'indium et d'étain) ou multicouche argent/couche à base de cristaux liquides 83/ deuxième électrode transparente 84 notamment ITO ou multicouche argent/ deuxième support transparent d'électrode 85 tel que du PET/ troisième intercalaire PVB ou EVA 7'.

A l'état off, le système est opaque et à l'état on le système est transparent. Le deuxième verre 1' est par exemple teinté ou identique au verre 1.

Les moyens d'extraction (non représentés) sont par exemple analogues, une couche diffusante, comme un émail blanc, sur la face interne 11 ou en variante sur la face externe 12.

La figure 6 montre une vue partielle en coupe d'un vitrage lumineux 600 avec isolateur optique dans un sixième mode de réalisation.

Seules les différences par rapport au deuxième mode sont décrites. Le vitrage lumineux 600 diffère comme suit.

Le premier revêtement de décor et/ou de masquage est remplacé par une couche miroir 50 à base d'argenture avec une surcouche de protection classique (non montré) ou un miroir espion à base de chrome. On forme donc un miroir éclairant. De préférence le miroir est visible au moins en zone centrale et la ou les zones lumineuses sont périphériques (une ou deux bandes pleines ou discontinues à partir de motifs discrets..). Les moyens d'extraction 6 sont par exemple une couche diffusante sur face interne 11.

On peut ajouter des diodes sur la tranche opposée (non montrée).

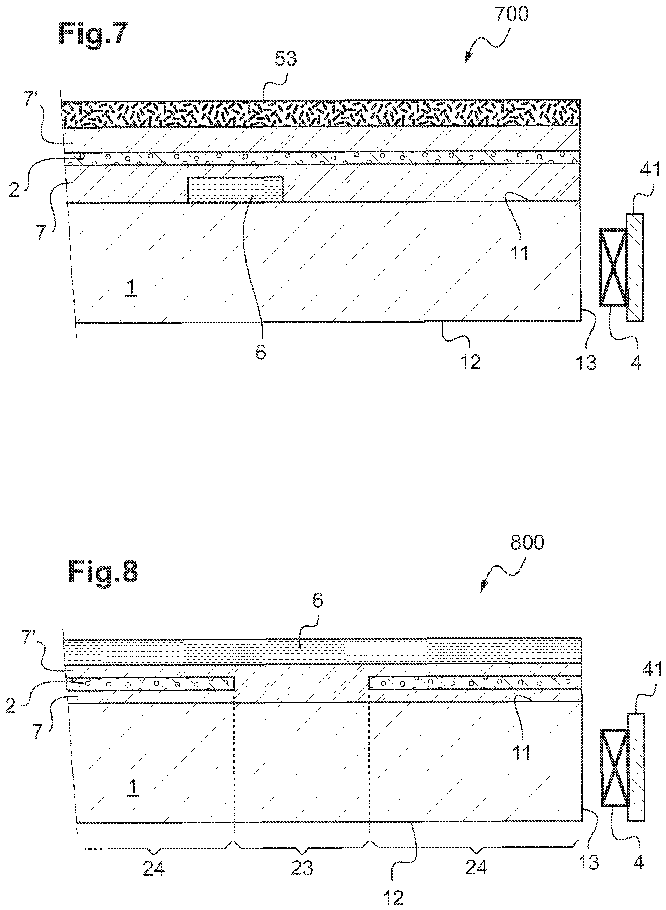

La figure 7 montre une vue partielle en coupe d'un vitrage lumineux 700 avec isolateur optique dans un septième mode de réalisation.

Seules les différences par rapport au deuxième mode sont décrites. Le vitrage lumineux 700 diffère comme suit.

Le deuxième substrat verrier est en verre organique, par exemple un film plastique teinté tel qu'un PET teinté 53 de préférence de face opposée à la face de collage libre. Par exemple on forme ainsi une porte de meuble de placard.

En variante, le premier substrat verrier 1 est organique par exemple PC ou PMMA.

La figure 8 montre une vue partielle en coupe d'un vitrage lumineux 800 avec isolateur optique dans un huitième mode de réalisation.

Seules les différences par rapport au troisième mode sont décrites. Le vitrage lumineux 800 diffère comme suit.

Le deuxième substrat verrier est en verre organique, par exemple un film diffusant 6 formant les moyens d'extraction dans la zone discontinue 23.

La figure 9 montre une vue partielle en coupe d'un vitrage lumineux 900 avec isolateur optique dans un neuvième mode de réalisation.

Seules les différences par rapport au deuxième mode sont décrites. Le vitrage lumineux 900 diffère comme suit.

On utilise ce vitrage lumineux 900 par exemple comme toit automobile. Le verre de guidage 1 est de 2mm environ comme le deuxième verre 1' (teinté).

Le vitrage lumineux 900 présente en périphérie une encapsulation polymérique en PU 90, noir ou grise, de type biface (flush face 12' opposée à la face de collage 11') de préférence sur un primaire d'adhésion ou en variante un joint prémonté de préférence flush aussi. L'encapsulation peut aussi être mono face, donc ne pas s'étendre sur la deuxième face 12.

L'espace entre la face émettrice et la tranche de couplage 13 (arrondie, pour un façonnage de type automobile) est remplie par de la colle optique 9'.

Le verre 1' est teinté et de préférence aussi le deuxième intercalaire 7'.

Le verre de guidage 1, présente un évidement longitudinal local sur la tranche de couplage 13 pour loger les diodes 4 qui sont à face émettrice latérale. De la colle 9' en face arrière du PCB 41 sert à fixer l'ensemble PCB+diodes sur la face de collage 11'. Le PCB, par exemple opaque, s'étend latéralement en direction de l'intercalaire de feuilletage 7 et sert pour masquer les points chauds. Il s'étend dans une gorge entre la face de collage et la première face par retrait des premiers et deuxième intercalaires de feuilletage de préférence chacun PVB+EVA, du film bas indice.

Le PCB 41 n'est pas en contact optique avec la face interne 12 car il y a une lame d'air. Le PCB, ici une barrette, peut être métallique pour la dissipation de chaleur ou sur une embase métallique.

Le PVB et/ou l'EVA du deuxième intercalaire 7' est de préférence teinté aussi.

Un revêtement opaque comme un émail 5' est en périphérique de la face de collage 12' et s'étendant entre la face de collage et le deuxième intercalaire 7' également pour favoriser le masquage de la lumière parasite s'échappant. Il peut aussi être coté face opposée à la face de collage.

La couche diffusante pour l'extraction est sur la face externe 12. La colle à l'arrière et/ou la colle avec la tranche 13 de couplage peut être retirée.

En variante, les moyens d'extraction 6 forment un concentrateur optique, pour un éclairage de lecture par exemple.

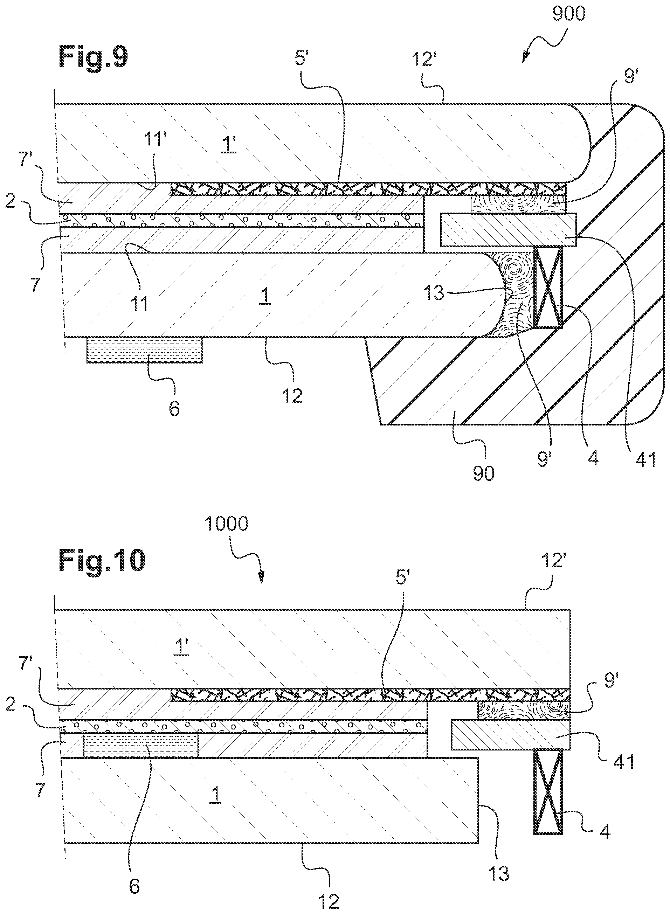

La figure 10 montre une vue partielle en coupe d'un vitrage lumineux 1000 avec isolateur optique dans un dixième mode de réalisation.

Seules les différences par rapport au neuvième mode sont décrites. Le vitrage lumineux 1000 diffère comme suit.

L'application est ici dans le bâtiment par exemple comme cloison. Les tranches des vitrages 1, 1' sont droites, les vitrages 1, 1' plus épais par exemple de 4 ou de 6mm environ. La couche diffusante pour l'extraction est sur la face interne et non la face externe 12. L'encapsulation polymérique est supprimée (optionnelle).

En variante, la couche 5' est supprimée. On peut utiliser un profilé de montage du vitrage lumineux (métallique, plastique, bois etc) par exemple de section en L ou en U dépassant sur les faces 12' et 12 sans être en contact optique de préférence avec la face 12. Ce profilé de montage peut servir aussi pour masquer les points chauds côté face externe et/ou face opposée à la face de collage.

La face 12' opposée à la face de collage 11' est en variante par exemple dépolie entièrement 120 ou partiellement, comme le verre Satinovo de la Demanderesse.

Au lieu de pratiquer un évidement local dans le verre de guidage 1 on peut décaler le deuxième verre pour le faire dépasser et même choisir un premier verre plus petit pour éviter un décalage des tranches opposées au côté du couplage optique

La face émettrice est espacée de préférence d'au plus 1mm de la tranche de couplage (sans colle optique).

En variante on utilise des diodes à émission par le haut, le support PCB est alors en face de la tranche de couplage et par exemple collé par une colle optique ou un double face transparent ou encore on utilise un profilé de fixation des diodes (ne dépassant pas de la tranche du deuxième vitrage 1' de préférence) en U ou en L de préférence métallique avec une base à l'arrière du support PCB et une aile fixée à la face de collage dans la zone dépassante et éventuellement un autre aile à l'opposée. Le ou les ailes peuvent servir à masquer les points chauds.

## Revendications

1. Vitrage lumineux (100, 200, 300, 400, 500, 600, 700, 800, 900, 1000) comportant :
- un premier substrat verrier (1), en verre minéral, d'indice de réfraction n1 inférieur à 1,6 à 550nm, avec des première (11) et deuxième faces principales (12) et une tranche (13, 14), et en contact optique avec la première face :
- un élément additionnel (1', 5, 5',50, 51, 52,53, 6) qui est teinté, diffusant, ou réfléchissant,
- un isolateur optique (2) intercalé entre le premier substrat verrier et l'élément additionnel, isolateur optique d'indice de réfraction inférieur à n1 à 550nm,
- une source de lumière (4), couplée optiquement au premier substrat verrier, le premier substrat verrier, dénommé verre de guidage, guidant la lumière émise par la source de lumière
- des moyens d'extraction de lumière (6) associés au verre de guidage, **caractérisé en ce que** l'isolateur optique comprend un film, dit bas indice, en matière à base de fluoropolymère qui est :
- d'indice de réfraction n2 à 550nm tel que n1-n2 est d'au moins 0,08,
- d'épaisseur e2 d'au moins 600nm,
- en contact optique avec la première face principale (11), dite face interne, par l'intermédiaire d'un premier intercalaire de feuilletage (7), à base de matière thermoplastique qui est d'indice de réfraction n3 à 550nm tel que n3-n1 en valeur absolue est inférieur à 0,05.

2. Vitrage lumineux (100, 200, 300, 400, 500, 600, 700, 800, 900, 1000) selon la revendication précédente **caractérisé en ce que** le film bas indice (2) présente une première surface principale (21) en contact avec le premier intercalaire de feuilletage (7) et une deuxième surface principale (22) opposée à la première surface principale, la première surface principale étant traitée par un traitement promoteur d'adhésion qui est de préférence un traitement corona.

3. Vitrage lumineux (100, 200, 300, 400, 500, 600, 700, 800, 900, 1000) selon l'une quelconque des revendications précédentes, **caractérisé en ce que** le fluoropolymère (2) est de l'ETFE ou du FEP.

4. Vitrage lumineux (100, 200, 300, 400, 500, 600, 700, 800, 1000) selon l'une quelconque des revendications précédentes, **caractérisé en ce que** le premier intercalaire de feuilletage (7) comprend une feuille d'EVA.

5. Vitrage lumineux (100, 200, 300, 400, 500, 600, 700, 800, 900, 1000) selon l'une quelconque des revendications précédentes, **caractérisé en ce que** le film bas indice (2) présentant une première surface principale (21) en contact avec le premier intercalaire de feuilletage (7) et une deuxième surface principale (22) opposée à la première surface principale, le vitrage comprend en outre :
- un deuxième intercalaire de feuilletage polymérique (7') en contact adhésif avec la deuxième surface principale (22) de préférence traitée par un promoteur d'adhésion notamment par traitement corona,
- un deuxième substrat verrier (1'), en verre minéral ou organique, de préférence en verre minéral, lié au deuxième intercalaire de feuilletage par une face dite de collage (11'),
le deuxième intercalaire et/ou le deuxième substrat verrier formant l'élément additionnel ou portant l'élément additionnel.

6. Vitrage lumineux (100, 200, 300, 400, 500, 600, 700, 800, 900, 1000) selon la revendication précédente, **caractérisé en ce que** le premier intercalaire de feuilletage (7) comprend une première feuille de PVB en contact adhésif avec la face interne et avec une première feuille d'EVA qui est en contact adhésif avec le film bas indice et **en ce que** le deuxième intercalaire de feuilletage comprend une deuxième feuille de PVB en contact adhésif avec la face de collage et avec une deuxième feuille d'EVA qui est en contact adhésif avec le film bas indice.

7. Vitrage lumineux (100, 200, 300, 400, 500, 600, 700, 800, 900, 1000) selon l'une des revendications 5 à 6, **caractérisé en ce que** le deuxième intercalaire de feuilletage (7') est teinté et/ou est feuilleté avec le deuxième substrat verrier teinté (1') et/ou porteur d'un film teinté (51, 52) orienté côté intercalaire de feuilletage ou face principale opposée au feuilletage.

8. Vitrage lumineux (900, 1000) selon l'une quelconque des revendications 5 à 7 en ce que le premier intercalaire de feuilletage (7), le film bas indice (2), le deuxième intercalaire sont en retrait de la tranche dite de couplage (13) du verre de guidage, laissant une gorge entre la première face (11) et la face de collage (12) du deuxième substrat verrier, de préférence minéral, et un support de la source de lumière, comme une carte à circuit imprimé dite support PCB, dépasse dans cette gorge de préférence sans être en contact optique avec la première face.

9. Vitrage lumineux (900, 1000) selon l'une quelconque des revendications 5 à 8 en ce que le deuxième substrat verrier dépasse de la tranche de guidage ou le verre de guidage comporte un évidement périphérique et la source de lumière sur un support, comme une carte à circuit imprimé dite support PCB, est dans l'évidement périphérique ou la zone dépassante ne dépassant pas de la tranche du deuxième substrat verrier et même du plan de la deuxième face, et le support de source est de préférence fixé à la face de collage dans la zone dépassante ou l'évidement périphérique et/ou dans une gorge entre la première face et la face de collage.

10. Vitrage lumineux (100, 500), 900 selon l'une des revendications 5 à 9, **caractérisé en ce que** la face de collage (11') du deuxième substrat (1'), de préférence en verre minéral, est revêtue d'une couche décorative et/ou de masquage (5, 5') notamment un émail et/ou une peinture ou une couche réfléchissante, périphérique et du côté du couplage optique, ou répartie et même couvrant sensiblement la face de collage ou **en ce que** la face opposée à la face de collage du deuxième substrat (1'), de préférence en verre minéral, est revêtue d'une couche décorative et/ou de masquage notamment un émail et/ou une peinture ou une couche réfléchissante (50), périphérique et du côté du couplage optique, ou répartie et même couvrant sensiblement la face opposée à la face de collage.

11. Vitrage lumineux selon l'une quelconque des revendications précédentes, **caractérisé en ce que** le premier substrat verrier en verre minéral est remplacé par un premier substrat verrier organique, de préférence PMMA ou PC, et de préférence le film bas indice présentant une première surface principale en contact avec le premier intercalaire de feuilletage et une deuxième surface principale opposée à la première surface principale, le vitrage lumineux comprend en outre :
- un deuxième intercalaire de feuilletage polymérique en contact adhésif avec la deuxième surface principale, de préférence traitée par un promoteur d'adhésion notamment par traitement corona,
- un deuxième substrat verrier, de préférence en verre minéral voire en verre organique, lié au deuxième intercalaire de feuilletage par une face dite de collage,
le deuxième intercalaire et/ou le deuxième substrat verrier formant l'élément additionnel ou portant l'élément additionnel.

12. Vitrage lumineux (300, 800) selon l'une quelconque des revendications précédentes, **caractérisé en ce que** le film bas indice (2) couvre partiellement le verre de guidage (1), présentant ainsi une première zone dite d'isolation optique (24), première zone d'isolation optique de préférence plus proche de la source de lumière (4) que les moyens d'extraction (6) et ce qu'une zone, dite zone lumineuse, adjacente à la première zone d'isolation optique comporte les moyens d'extraction, notamment formés par une couche diffusante de préférence qui est une peinture, notamment une laque, ou un émail.

13. Vitrage lumineux (500) selon l'une quelconque des revendications précédentes, **caractérisé en ce qu'**il comprend un système électrocommandable à propriétés optiques variables, notamment à cristaux liquides, à valve optique, électrochrome, thermochrome, de préférence au-dessus de l'isolateur optique.

14. Vitrage lumineux (100, 200, 300, 400, 500, 600, 700, 800, 900, 1000) selon l'une des revendications précédentes **caractérisé en ce qu'**une couche diffusante est blanche, notamment une peinture ou un émail de préférence qui fait partie ou forme les moyens d'extractions à l'opposé du premier intercalaire de feuilletage ou du côté du premier intercalaire de feuilletage dans une zone dépourvue de l'isolateur optique.

15. Vitrage lumineux (100, 200, 300, 400, 500, 600, 700, 800, 900, 1000) selon l'une des revendications précédentes **caractérisé en ce que** les moyens d'extraction sont diffusants, sous forme d'une texturation de surface, ou d'une couche diffusante notamment un émail, une peinture, une encre ou encore un sticker diffusant et/ou forment un concentrateur de lumière.

16. Vitrage lumineux (100, 200, 300, 400, 500, 600, 700, 800, 900, 1000) selon l'une des revendications précédentes **caractérisé en ce que** la source de lumière est un ensemble de diodes électroluminescentes de préférence sur une carte de circuit imprimé et couplées à la tranche du verre de guidage.

17. Vitrage lumineux (100, 200, 300, 400, 500, 600, 700, 800, 900, 1000) selon l'une quelconque des revendications précédentes, **caractérisé en ce qu'**il forme un vitrage lumineux de véhicule, de préférence un toit vitré feuilleté lumineux.

18. Vitrage lumineux (100, 200, 300, 400, 500, 600, 700, 800, 900, 1000) selon l'une quelconque des revendications précédentes, **caractérisé en ce qu'**il forme un vitrage lumineux de bâtiment, de mobilier urbain ou d'ameublement intérieur, ou d'équipement réfrigéré domestique ou professionnel.

## Patentansprüche

1. Leuchtverglasung (100, 200, 300, 400, 500, 600, 700, 800, 900, 1000), umfassend:
- ein erstes Glassubstrat (1) aus mineralischem Glas, das einen Brechungsindex n1 aufweist, der bei 550 nm kleiner als 1,6 ist, mit einer ersten (11) und einer zweiten Hauptseite (12) und einem Rand (13, 14), und in optischem Kontakt mit der ersten Seite:
- ein zusätzliches Element (1', 5, 5', 50, 51, 52, 53, 6), das getönt, streuend oder reflektierend ist,
- einen optischen Isolator (2), der zwischen dem ersten Glassubstrat und dem zusätzlichen Element eingeschoben ist, wobei der optische Isolator einen Brechungsindex aufweist, der bei 550 nm kleiner als n1 ist,
- eine Lichtquelle (4), die mit dem ersten Glassubstrat optisch gekoppelt ist, wobei das erste Glassubstrat, das als Leitglas bezeichnet wird, das von der Lichtquelle abgestrahlte Licht leitet,
- Lichtextraktionsmittel (6), die mit dem Leitglas verbunden sind, **dadurch gekennzeichnet, dass** der optische Isolator einen sogenannten Niederindex-Film aus einem Material auf Fluorpolymerbasis umfasst, der:
- einen Brechungsindex n2 bei 550 nm aufweist, sodass n1 - n2 mindestens 0,08 ist,
- eine Dicke e2 von mindestens 600 nm aufweist,
- mit der ersten Hauptseite (11), der sogenannten Innenseite, in optischem Kontakt ist mittels einer ersten Laminatzwischenschicht (7) auf der Basis von thermoplastischem Material, das bei 550 nm einen Brechungsindex n3 aufweist, sodass n3 - n1 als absoluter Wert kleiner als 0,05 ist,.

2. Leuchtverglasung (100, 200, 300, 400, 500, 600, 700, 800, 900, 1000) nach dem vorhergehenden Anspruch, **dadurch gekennzeichnet, dass** der Niederindex-Film (2) eine erste Hauptfläche (21) in Kontakt mit der ersten Laminatzwischenschicht (7) und eine zu der ersten Hauptfläche entgegengesetzte zweite Hauptfläche (22) aufweist, wobei die erste Hauptfläche durch eine Haftvermittlerbehandlung behandelt ist, die vorzugsweise eine Koronabehandlung ist.

3. Leuchtverglasung (100, 200, 300, 400, 500, 600, 700, 800, 900, 1000) nach einem der vorhergehenden Ansprüche, **dadurch gekennzeichnet, dass** das Fluorpolymer (2) ETFE oder FEP ist.

4. Leuchtverglasung (100, 200, 300, 400, 500, 600, 700, 800, 1000) nach einem der vorhergehenden Ansprüche, **dadurch gekennzeichnet, dass** die erste Laminatzwischenschicht (7) eine EVA-Folie umfasst.

5. Leuchtverglasung (100, 200, 300, 400, 500, 600, 700, 800, 900, 1000) nach einem der vorhergehenden Ansprüche, **dadurch gekennzeichnet, dass** der Niederindex-Film (2) eine erste Hauptfläche (21) in Kontakt mit der ersten Laminatzwischenschicht (7) und eine zu der ersten Hauptfläche entgegengesetzte zweite Hauptfläche (22) aufweist, wobei die Verglasung außerdem umfasst:
- eine zweite polymere Laminatzwischenschicht (7') in Klebekontakt mit der zweiten Hauptfläche (22), die vorzugsweise mit einem Haftvermittler, insbesondere durch Koronabehandlung, behandelt ist,
- ein zweites Glassubstrat (1') aus mineralischem oder organischem Glas, vorzugsweise aus mineralischem Glas, das mit der zweiten Laminatzwischenschicht über eine sogenannte Klebeseite (11') verbunden ist,
wobei die zweite Zwischenschicht und/oder das zweite Glassubstrat das zusätzliche Element bilden oder das zusätzliche Element tragen.

6. Leuchtverglasung (100, 200, 300, 400, 500, 600, 700, 800, 900, 1000) nach dem vorhergehenden Anspruch, **dadurch gekennzeichnet, dass** die erste Laminatzwischenschicht (7) eine erste PVB-Folie in Klebekontakt mit der Innenseite und mit einer ersten EVA-Folie umfasst, die in Klebekontakt mit dem Niederindex-Film ist, und dass die zweite Laminatzwischenschicht eine zweite PVB-Folie in Klebekontakt mit der Klebeseite und mit einer zweiten EVA-Folie umfasst, die in Klebekontakt mit dem Niederindex-Film ist.

7. Leuchtverglasung (100, 200, 300, 400, 500, 600, 700, 800, 900, 1000) nach einem der Ansprüche 5 bis 6, **dadurch gekennzeichnet, dass** die zweite Laminatzwischenschicht (7') getönt ist und/oder mit dem zweiten getönten Glassubstrat (1') laminiert ist und/oder einen getönten Film (51, 52) trägt, der auf einer Laminatzwischenschichtseite oder Hauptseite entgegengesetzt zu der Laminierung ausgerichtet ist.

8. Leuchtverglasung (900, 1000) nach einem der Ansprüche 5 bis 7, wobei die erste Laminatzwischenschicht (7), der Niederindex-Film (2), die zweite Zwischenschicht von dem sogenannten Kopplungsrand (13) des Leitglases zurückgesetzt sind, wodurch eine Nut zwischen der ersten Seite (11) und der Klebeseite (12) des zweiten Glassubstrats, das vorzugsweise aus mineralischem Glas ist, entsteht, und ein Träger der Lichtquelle, wie eine Leiterplatte, ein sogenannter PCB-Träger, in diese Nut hervorragt, vorzugsweise ohne in optischem Kontakt mit der ersten Seite zu sein.

9. Leuchtverglasung (900, 1000) nach einem der Ansprüche 5 bis 8, wobei das zweite Glassubstrat über den Leitrand hervorragt oder das Leitglas eine Randsaussparung umfasst und die Lichtquelle auf einem Träger wie einer Leiterplatte, einem sogenannten PCP-Träger, sich in der Randaussparung befindet oder die hervorragende Zone nicht über den Rand des zweiten Glassubstrats und sogar die Ebene der zweiten Seite hervorragt und der Lichtquellenträger vorzugsweise an der Klebeseite in der hervorragenden Zone oder der Randaussparung und/oder in einer Nut zwischen der ersten Seite und der Klebeseite befestigt ist.

10. Leuchtverglasung (100, 500), 900 nach einem der Ansprüche 5 bis 9, **dadurch gekennzeichnet, dass** die Klebeseite (11') des zweiten Substrats (1'), das vorzugsweise aus mineralischem Glas ist, mit einer dekorativen und/oder Maskierungsschicht (5, 5'), insbesondere ein Email und/oder einem Anstrich oder einer reflektierenden, peripheren und auf der Seite der optischen Kopplung befindlichen Schicht beschichtet ist oder im Wesentlichen auf der Klebeseite verteilt ist oder sogar diese abdeckt, oder dass die Seite, die entgegengesetzt zu der Klebeseite des zweiten Substrats (1') ist, das vorzugsweise aus mineralischem Glas ist, mit einer dekorativen und/oder Maskierungsschicht, insbesondere ein Email und/oder einem Anstrich oder einer reflektierenden, peripheren und auf der Seite der optischen Kopplung befindlichen Schicht (50) beschichtet ist oder im Wesentlichen auf der Seite, die entgegengesetzt zu der Klebeseite ist, verteilt ist oder sogar diese abdeckt.

11. Leuchtverglasung nach einem der vorhergehenden Ansprüche, **dadurch gekennzeichnet, dass** das erste Glassubstrat aus mineralischem Glas durch ein erstes organisches Glassubstrat, vorzugsweise PMMA oder PC, ersetzt ist und vorzugsweise der Niederindex-Film eine erste Hauptfläche in Kontakt mit der ersten Laminatzwischenschicht und eine zweite zu der ersten Hauptfläche entgegengesetzte Hauptfläche aufweist, wobei die Leuchtverglasung außerdem umfasst:
- eine zweite polymere Laminatzwischenschicht in Klebekontakt mit der zweiten Hauptfläche, die vorzugsweise mit einem Haftvermittler, insbesondere durch Koronabehandlung behandelt ist,
- ein zweites Glassubstrat, vorzugsweise aus mineralischem Glas bzw. aus organischem Glas, das mit der zweiten Laminatzwischenschicht durch eine sogenannte Klebeseite verbunden ist,
wobei die zweite Zwischenschicht und/oder das zweite Glassubstrat das zusätzliche Element bilden oder das zusätzliche Element tragen.

12. Leuchtverglasung (300, 800) nach einem der vorhergehenden Ansprüche, **dadurch gekennzeichnet, dass** der Niederindex-Film (2) das Leitglas (1) partiell bedeckt, wodurch es somit eine erste sogenannte optische Isolationszone (24) aufweist, wobei die erste optische Isolationszone vorzugsweise näher zu der Lichtquelle (4) ist als die Extraktionsmittel (6), und dass eine Zone, eine sogenannte Leuchtzone, die an die erste optische Isolationszone angrenzt, welche Extraktionsmittel umfasst, die insbesondere von einer streuenden Schicht gebildet werden, die vorzugsweise ein Anstrich, insbesondere ein Lack, oder ein Email ist.

13. Leuchtverglasung (500) nach einem der vorhergehenden Ansprüche, **dadurch gekennzeichnet, dass** sie ein elektrisch steuerbares System mit variablen optischen Eigenschaften, insbesondere mit Flüssigkristallen, mit einem optischen, elektrochromen, thermochromen Ventil vorzugsweise über dem optischen Isolator umfasst.

14. Leuchtverglasung (100, 200, 300, 400, 500, 600, 700, 800, 900, 1000) nach einem der vorhergehenden Ansprüche, **dadurch gekennzeichnet, dass** eine streuende Schicht weiß ist, insbesondere ein Anstrich oder ein Email ist, die vorzugsweise ein Teil der Extraktionsmittel entgegengesetzt zu der ersten Laminatzwischenschicht oder der Seite der ersten Laminatzwischenschicht in einer Zone ohne optischen Isolator ist oder diese bildet.

15. Leuchtverglasung (100, 200, 300, 400, 500, 600, 700, 800, 900, 1000) nach einem der vorhergehenden Ansprüche, **dadurch gekennzeichnet, dass** die Extraktionsmittel streuend, in Form einer Oberflächentexturierung oder einer streuenden Schicht, insbesondere eines Emails, eines Anstrichs, einer Tinte oder auch ein streuender Sticker sind und/oder einen Lichtkonzentrator bilden.

16. Leuchtverglasung (100, 200, 300, 400, 500, 600, 700, 800, 900, 1000) nach einem der vorhergehenden Ansprüche, **dadurch gekennzeichnet, dass** die Lichtquelle eine Einheit von Elektrolumineszenzdioden ist, vorzugsweise auf einer Leiterplatte und mit dem Rand des Leitglases gekoppelt.

17. Leuchtverglasung (100, 200, 300, 400, 500, 600, 700, 800, 900, 1000) nach einem der vorhergehenden Ansprüche, **dadurch gekennzeichnet, dass** sie eine Leuchtverglasung eines Fahrzeugs, vorzugsweise ein Leuchtlaminatglasdach bildet.

18. Leuchtverglasung (100, 200, 300, 400, 500, 600, 700, 800, 900, 1000) nach einem der vorhergehenden Ansprüche, **dadurch gekennzeichnet, dass** sie eine Leuchtverglasung eines Gebäudes, von Stadtmöbeln oder Möbeln für den Innenbereich oder einer häuslichen oder gewerblichen Kühleinrichtung bildet.

## Claims

1. A luminous glazing unit (100, 200, 300, 400, 500, 600, 700, 800, 900, 1000) comprising:
- a first glass substrate (1), made of mineral glass having a refractive index n1 of less than 1.6 at 550 nm, with first (11) and second (12) main faces and an edge face (13, 14), and in optical contact with the first face:
- an additional element (1', 5, 5', 50, 51, 52, 53, 6) which is tinted, scattering, or reflective,
- an optical isolator (2) inserted between the first glass substrate and the additional element, the optical isolator having a refractive index of less than n1 at 550 nm,
- a light source (4), optically coupled to the first glass substrate, the first glass substrate, referred to as a guiding glass pane, guiding the light emitted by the light source,
- light-extracting means (6) associated with the guiding glass pane, **characterized in that** the optical isolator comprises a film, referred to as a low-index film, made of fluoropolymer-based material which:
- has a refractive index n2 at 550 nm such that n1-n2 is at least 0.08,
- has a thickness e2 of at least 600 nm,
- is in optical contact with the first main face (11), referred to as the inner face, by means of a first lamination interlayer (7), based on a thermoplastic material which has a refractive index n3 at 550 nm such that n3-n1, as an absolute value, is less than 0.05.

2. The luminous glazing unit (100, 200, 300, 400, 500, 600, 700, 800, 900, 1000) as claimed in the preceding claim, **characterized in that** the low-index film (2) has a first main surface (21) in contact with the first lamination interlayer (7) and a second main surface (22) opposite the first main surface, the first main surface being treated by an adhesion-promoting treatment which is preferably a corona treatment.

3. The luminous glazing unit (100, 200, 300, 400, 500, 600, 700, 800, 900, 1000) as claimed in either one of the preceding claims, **characterized in that** the fluoropolymer (2) is ETFE or FEP.

4. The luminous glazing unit (100, 200, 300, 400, 500, 600, 700, 800, 1000) as claimed in any one of the preceding claims, **characterized in that** the first lamination interlayer (7) comprises a sheet of EVA.

5. The luminous glazing unit (100, 200, 300, 400, 500, 600, 700, 800, 900, 1000) as claimed in any one of the preceding claims, **characterized in that** the low-index film (2) has a first main surface (21) in contact with the first lamination interlayer (7) and a second main surface (22) opposite the first main surface, the glazing unit additionally comprises:
- a second polymeric lamination interlayer (7') in adhesive contact with the second main surface (22) preferably treated by an adhesion promoter, in particular by corona treatment,
- a second glass substrate (1'), made of mineral or organic glass, preferably made of mineral glass, bonded to the second lamination interlayer via a face referred to as a bonding face (11'),
the second interlayer and/or the second glass substrate forming the additional element or bearing the additional element.

6. The luminous glazing unit (100, 200, 300, 400, 500, 600, 700, 800, 900, 1000) as claimed in the preceding claim, **characterized in that** the first lamination interlayer (7) comprises a first sheet of PVB in adhesive contact with the inner face and with a first sheet of EVA which is in adhesive contact with the low-index film and **in that** the second lamination interlayer comprises a second sheet of PVB in adhesive contact with the bonding face and with a second sheet of EVA which is in adhesive contact with the low-index film.

7. The luminous glazing unit (100, 200, 300, 400, 500, 600, 700, 800, 900, 1000) as claimed in either of claims 5 and 6, **characterized in that** the second lamination interlayer (7') is tinted and/or is laminated with the second tinted glass substrate (1') and/or bears a tinted film (51, 52) oriented on the side of the lamination interlayer or main face opposite the lamination.

8. The luminous glazing unit (900, 1000) as claimed in any one of claims 5 to 7, **characterized in that** the first lamination interlayer (7), the low-index film (2), and the second interlayer are set back from the coupling edge face (13) of the guiding glass pane, leaving a groove between the first face (11) and the bonding face (12) of the second, preferably mineral, glass substrate, and a carrier for the light source, such as a printed circuit board referred to as a PCB carrier, projects into this groove preferably without being in optical contact with the first face.

9. The luminous glazing unit (900, 1000) as claimed in any one of claims 5 to 8, **characterized in that** the second glass substrate projects beyond the guiding edge face or the guiding glass pane comprises a peripheral recess and the light source on a carrier, such as a printed circuit board referred to as a PCB carrier, is in the peripheral recess or the projecting zone not projecting beyond the edge face of the second glass substrate and even beyond the plane of the second face, and the source carrier is preferably attached to the bonding face in the projecting zone or the peripheral recess and/or in a groove between the first face and the bonding face.

10. The luminous glazing unit (100, 500, 900) as claimed in one of claims 5 to 9, **characterized in that** the bonding face (11') of the second substrate (1'), preferably made of mineral glass, is coated with a decorative and/or masking layer (5, 5') in particular an enamel and/or a paint or a reflective layer, which is peripheral and on the side of the optical coupling, or distributed and even substantially covering the bonding face or **in that** the face opposite the bonding face of the second substrate (1'), preferably made of mineral glass, is coated with a decorative and/or masking layer in particular an enamel and/or a paint or a reflective layer (50), which is peripheral and on the side of the optical coupling, or distributed and even substantially covering the face opposite the bonding face.

11. The luminous glazing unit as claimed in any one of the preceding claims, **characterized in that** the first glass substrate made of mineral glass is replaced by a first organic, preferably PMMA or PC, glass substrate, and preferably the low-index film having a first main surface in contact with the first lamination interlayer and a second main surface opposite the first main surface, the luminous glazing unit additionally comprises:
- a second polymeric lamination interlayer in adhesive contact with the second main surface, preferably treated by an adhesion promoter, in particular by corona treatment,
- a second glass substrate, preferably made of mineral glass or even made of organic glass, bonded to the second lamination interlayer via a face referred to as a bonding face,
the second interlayer and/or the second glass substrate forming the additional element or bearing the additional element.

12. The luminous glazing unit (300, 800) as claimed in any one of the preceding claims, **characterized in that** the low-index film (2) partially covers the guiding glass pane (1), thus having a first zone referred to as an optical isolation zone (24), first optical isolation zone preferably closer to the light source (4) than the extracting means (6) and **in that** a zone referred to as a luminous zone, adjacent to the first optical isolation zone, comprises extracting means, in particular formed by a scattering layer, preferably which is a paint, in particular a lacquer, or an enamel.

13. The luminous glazing unit (500) as claimed in any one of the preceding claims, **characterized in that** it comprises an electrically controllable system having variable optical properties, in particular having liquid crystals or having a light valve, electrochrome or thermochrome, preferably on top of the optical isolator.

14. The luminous glazing unit (100, 200, 300, 400, 500, 600, 700, 800, 900, 1000) as claimed in one of the preceding claims, **characterized in that** a scattering layer is white, in particular a paint or an enamel, preferably which is part of or forms the extracting means on the opposite side from the first lamination interlayer or on the side of the first lamination interlayer in a zone free of the optical isolator.

15. The luminous glazing unit (100, 200, 300, 400, 500, 600, 700, 800, 900, 1000) as claimed in one of the preceding claims, **characterized in that** the extracting means are scattering, in the form of a surface texturing, or of a scattering layer, in particular an enamel, a paint, an ink or else a scattering sticker and/or form a light concentrator.

16. The luminous glazing unit (100, 200, 300, 400, 500, 600, 700, 800, 900, 1000) as claimed in one of the preceding claims, **characterized in that** the light source is an array of light-emitting diodes, preferably on a printed circuit board and coupled to the edge face of the guiding glass pane.

17. The luminous glazing unit (100, 200, 300, 400, 500, 600, 700, 800, 900, 1000) as claimed in any one of the preceding claims, **characterized in that** it forms a luminous glazing unit for a vehicle, preferably a luminous laminated glazed roof.

18. The luminous glazing unit (100, 200, 300, 400, 500, 600, 700, 800, 900, 1000) as claimed in any one of the preceding claims, **characterized in that** it forms a luminous glazing unit for a building, for street furniture or for interior furniture, or for domestic or professional refrigerated equipment.
